# EUROPEAN PATENT APPLICATION

(11) **EP 3 832 567 A1**
(43) Date of publication of application: **09.06.2021**
(21) Application number: 19843266.8
(22) Date of filing: 12.07.2019
(51) Int. Cl.: G06Q 10/08, G06Q 50/10

(54) **ALCOHOL INFORMATION MANAGEMENT SYSTEM AND MANAGEMENT METHOD**

(30) Priority: 31.07.2018 JP 2018143558
(71) Applicant: Iroxori Corporation, Tokyo 107-0062 (JP)
(72) Inventor: NAKANISHI Kenichi, Tokyo 107-0062 (JP)
(74) Representative: Flügel Preissner Schober Seidel
(86) International application number: PCT/JP2019/027660
(87) International publication number: WO 2020/026763

(57) **Abstract**

An integrated management server comprising: a data formatting means for receiving sales record information from a plurality of distributor terminals of a plurality of distributors which are selling products to retailers; a data matching means for updating brand master information for universally managing alcoholic beverage brands sold to the retailers across the plurality of distributors based on each of the received sales record information; and a brand Identification means for analyzing image related information received from a user terminal, identifying an alcoholic beverage brand by comparing a feature information corresponding to an alcoholic beverage brand registered in the brand master information, and sending information related to identified alcoholic beverage brand to the user terminal; and the user terminal comprising: a display means for displaying information on the sent alcoholic beverage brand.

## Description

### [Technical Field]

The present invention relates to an Information Management System and a Management Method for Alcoholic Beverages.

### [Background Art]

As a background art of the present technical field, JP 2003-16351 (Patent Literature 1) is available. This publication states that "A product purchase support system and the like that can guide a user to a store where the user can purchase a desired product. The product information management server 10 grasps the presence or absence of an inventory based on the product management information sent from the store server 50 prepared for each store. When the navigation device 20 receives product identification information to be searched for from the user, the product identification information is sent to the product information management server 10, and the product information management server 10 sent the retailer information about the store where the product can be purchased to the navigation device 20. The navigation device 20 displays the position of a store where the product can be purchased on a map so that the user knows the location of the store where the product can be purchased. If necessary, the navigation device 20 can also instruct the route to the store. This solves inconveniences such as the fact that the product cannot be purchased because of stockout even after visiting the store."

Further, JP 2003-85422 (Patent Literature 2) is available. This publication states that "it provides a product inventory checking system and a product inventory checking method that enable users to quickly obtain information that particular products in which they want to purchase are now stored in which stores and how many inventories are stored, and to ensure that the specific product is purchased at the desired seller. In a communication system 100 that a business unit 2 which is serving to provide an inventory information of specific products in a specific seller to the user, and a user 4 which wishing to receive inventory information from the business unit 2, are arranged to be enabled to connect to each other via a communication line 5, the business unit 2 creates each product inventory information database 8 based on the inventory information of the specific products received in real time from a plurality of sellers 6, and in response to a request from the user 4, provides each seller inventory information for predetermined products to the user 4".

### [Citation List]

### [Patent Literature]

[Patent Literature 1] JP2003-16351A
[Patent Literature 2] JP2003-85422A

### [Summary of Invention]

### [Technical Problem]

Patent Literature 1 describes a product purchase support system that receives product management information from a store server prepared for each store and performs inventory management. However, in the product purchase support system of Patent Literature 1, it is necessary to install servers in all of a huge number of stores for inventory management, so the management becomes complicated.

Patent Literature 2 describes a product inventory status checking system that creates a product inventory information database based on inventory information received from a plurality of sellers and provides users with each seller's inventory information of predetermined products. However, even in the product inventory state checking system of Patent Literature 2, it is necessary to install systems in all of a huge number of sellers for inventory management, and the management becomes complicated.

Accordingly, the present invention provides a management system and management method for products using sales record information of distributors which wholesales products to restaurants or retail stores. For example, a system for managing brands of alcoholic beverages sold in restaurants, taverns, or liquor shops is provided.

### [Solution to Problem]

In order to solve the above-mentioned problems, for example, a configuration described in the claims is adopted.
The present application includes a plurality of means for solving the above-mentioned problems, and as an example thereof, an information management system comprising, an integrated management server comprising: a data formatting means for receiving sales record information from a plurality of distributor terminals of a plurality of distributors which are selling products to retailers; a data matching means for updating brand master information for universally managing alcoholic beverage brands sold to the retailers across the plurality of distributors based on each of the received sales record information; and a brand Identification means for analyzing image related information received from a user terminal, identifying an alcoholic beverage brand by comparing a feature information corresponding to an alcoholic beverage brand registered in the brand master information, and sending information related to identified alcoholic beverage brand to the user terminal; and the user terminal comprising: a display means for displaying information on the sent alcoholic beverage brand.

### [Advantageous Effects of Invention]

The present invention can provide management of a wide range of products based on sales record information of distributors, wholesaling the products to restaurants or retail stores. The present invention also makes it possible to manage information of products handled in restaurants or retail stores without installing an inventory management system in each of a huge number of restaurants or retail stores. The present invention can also provide users with product information on a wide range of alcoholic beverages by using the sales record information of distributors.
Other problems, configurations, and effects other than those described above will be explained by the following description of embodiments.

### [Brief Description of Drawings]

[Fig. 1] Fig. 1 is an example of a configuration diagram of the entire Management System 1
[Fig. 2] Fig. 2 is an example of a hardware configuration of Integrated Management Server 101.
[Fig. 3] Fig. 3 is an example of a hardware configuration of User Terminal 103.
[Fig. 4] Fig. 4 is an example of a hardware configuration of Distributor Terminal 102.
[Fig. 5] Fig. 5 is an example of a hardware configuration of Retailer Terminal 104.
[Fig. 6] Fig. 6 is an example of a hardware configuration of Manufacturer Terminal 105.
[Fig. 7] Fig. 7 is an example of User Master Table 700.
[Fig. 8] Fig. 8 is an example of Brand Master Table 800.
[Fig. 9] Fig. 9 is an example of Retailer Master Table 900.
[Fig. 10] Fig. 10 is an example of User-Registered Brand Table 1000.
[Fig. 11] Fig. 11 is an example of Retailer-Handled Brand Table 1100.
[Fig. 12] Fig. 12 is an example of Brand Analysis Table 1200.
[Fig. 13] Fig. 13 is an example of Distributor Product Table 1300.
[Fig. 14] Fig. 14 is an example of Distributor Retailer Table 1400.
[Fig. 15] Fig. 15 is an example of Distributor Staff Table 1500.
[Fig. 16] Fig. 16 is an example of Distributor Sales Record Table 1600.
[Fig. 17] Fig. 17 is an example of Brand Master Linkage Table 1700.
[Fig. 18] Fig. 18 is an example of Retailer Master Linkage Table 1800.
[Fig. 19] Fig. 19 is an example of Data Formatting Process Flow.
[Fig. 20] Fig. 20 is an example of Data Matching Process Flow for Distributor Sales Record Table 1600.
[Fig. 21] Fig. 21 is an example of Data Analysis Process Flow.
[Fig. 22] Fig. 22 is an example of Brand Registration Process Flow.
[Fig. 23] Fig. 23 is an example of Brand Identification Process Flow.
[Fig. 24] Fig. 24 is an example of Brand Analysis Process Flow.
[Fig. 25] Fig. 25 is an example of Brand Scan Process Flow.
[Fig. 26] Fig. 26 is an example of Post List Display 2600.
[Fig. 27] Fig. 27 is an example of another display 2700 of the registration list screen.
[Fig. 28] Fig. 28 is an example of displaying brand-handling retailers on the map.
[Fig. 29] Fig. 29 is an example of Brand Registration Display.
[Fig. 30] Fig. 30 is an example of displaying additional information of a brand in Brand Registration Process.
[Fig. 31] Fig. 31 is an example of Brand Scan Display.
[Fig. 32] Fig. 32 is another display example of Brand Scan Display.
[Fig. 33] Fig. 33 is another display example of Brand Scan Display.
[Fig. 34] Fig. 34 is a diagram for illustrating a determination process on the popularity of Brand Analysis Table 1200.
[FIG. 35] Fig. 35 is a diagram for illustrating a determination process on the scarcity of Brand Analysis Table 1200.

### [Description of Embodiments]

In recent years, some applications enable users to register and manage brands of alcoholic beverages consumed by the users.
However, these applications only support a specific category of alcoholic beverages, such as wine, sake, whisky, or the like, so users cannot register brands beyond the category. That causes inconvenience to users who like a wide range of categories, such as users who like wine and sake, since the users need to use and manage different applications for each category. Besides, although these applications enable users to register brands that the users drank, the users cannot easily register or review brands that the users wish to drink.

Therefore, in the present embodiments, users can easily register brands that the users drank or want to drink regardless of alcoholic beverage categories and review the information of the alcoholic beverage registered as the drunk-brands or wish-to-drink brands by various methods.
For example, the embodiments make it possible to scan and display the drunk-brands or wish-to-drink brands and to display stores that provide the wish-to-drink brands on maps or lists.

Embodiments will be described below with the drawings.

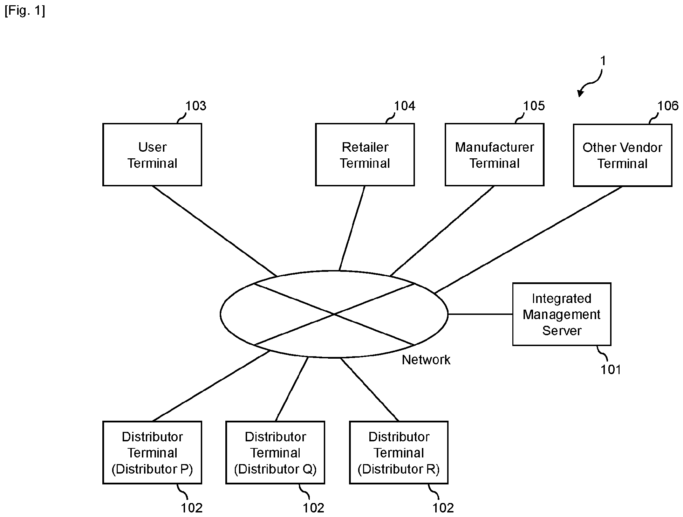

FIG. 1 is an example of a configuration diagram of an entire Management System 1.
Management System 1 includes a plurality of Distributor Terminals 102, a plurality of User Terminals 103, a plurality of Retailer Terminals 104, a plurality of manufacturer terminals 105, and a plurality of Other Vendor Terminals 106, each of which is connected to Integrated Management Server 101 through a network. Each terminal can send and receive information via a network, regardless of whether the network is wired or wireless.

Each terminal of Management System 1 or Management Server 101 may be, for example, a portable terminal (mobile terminal), such as a smartphone, tablet, mobile phone, or mobile information device (PDA), or may be a wearable terminal such as a glasses type, a wristwatch type, or a clothing type. It may also be stationary, a portable computer, or a server located on a cloud or network. The function may be a VR (Virtual Reality) terminal, an AR terminal, or an MR (Mixed Reality) terminal. Alternatively, a combination of a plurality of these terminals may be applicable. For example, a combination of one smartphone and one wearable terminal may logically function as one terminal. An information processing terminal other than these may also be applicable.

Distributor Terminal 102 is a terminal owned by each distributor, for example, distributor P, Q, and R. Distributors wholesale products, such as alcoholic beverages and other products, to restaurants or retail stores, and each distributor manages its customer retailers, sales products, and sales records. This specification describes the management of alcoholic beverages in particular but the product is not limited to alcoholic beverages, and the present invention can be implemented with a similar configuration for foods, foodstuffs, and the like. When the present invention is implemented for products other than alcoholic beverages, identification of brands of alcoholic beverages is replaced by identification of types or contents of the products.

User Terminal 103 is a device owned or used by a user who purchases products such as alcoholic beverages from restaurants or retail stores. The user registers and manages product information such as DRANK and WISH-to-DRINK alcoholic beverages. When the present invention is implemented in products other than alcoholic beverages, the user registers and manages "drank, ate, and purchased" information and "wish-to-drink, wish-to-eat, wish-to-buy, and wish" information.

Retailer Terminal 104 is a terminal owned or used by a restaurant, retail store, and the like, which is a customer of distributors. Manufacturer Terminal 105 is a terminal owned or used by a manufacturer that manufactures and sells products. Other Vendor Terminals 106 are terminals owned or used by vendors involved in the supply chain, from manufacturers to retailers, of alcoholic beverages and other products.

Integrated Management Server 101 receives, from a plurality of Distributor Terminal 102, information on retailers to which products are sold, sold products, and sales records, formats the information in a common format, and manages the formatted information. It also receives image-related information of products such as alcoholic beverages from User Terminal 103, determines product names and the like, and sends them together with the product-related information to User Terminal 103.

Each of the terminals and Integrated Management Server 101 of Management System 1 comprises a processor for executing operating systems, applications, programs, and the like; Main Storage Device such as a RAM (Random Access Memory); Auxiliary Storage Device such as an IC card, a hard disk drive, an SSD (Solid State Drive), or a flash memory; a communication control unit such as a network card, a wireless communication module, a mobile communication module, or the like; an input device such as a touch panel, a keyboard, a mouse, voice input, or input by motion detection by imaging of the camera unit; and an output device such as a monitor or a display. The output device may be a device or a terminal for sending information to be output to an external monitor, a display, a printer, a device, or the like.

Various programs and applications (modules) are stored in Main Storage Device, and each functional element of the entire system is realized by the processor executing these programs and applications. Each of these modules may be implemented by hardware by integration or the like. Each module may be an independent program or application but may be implemented in the form of a single integrated program or some subprograms or functions within an application.

In this specification, each module is described as a subject that executes processing. But in practice, a processor, that processes various programs, applications, or the like (modules), does execute processing.
Various databases (DB) are stored in Auxiliary Storage Device. A "database" is a functional element (storage unit) that stores a data set so that it can handle any data manipulation (e.g., extracting, adding, deleting, overwriting, etc.) from a processor or an external computer. The method of implementation of the database is not limited and may be, for example, a database management system, a spreadsheet software, or a text file such as XML or JSON.

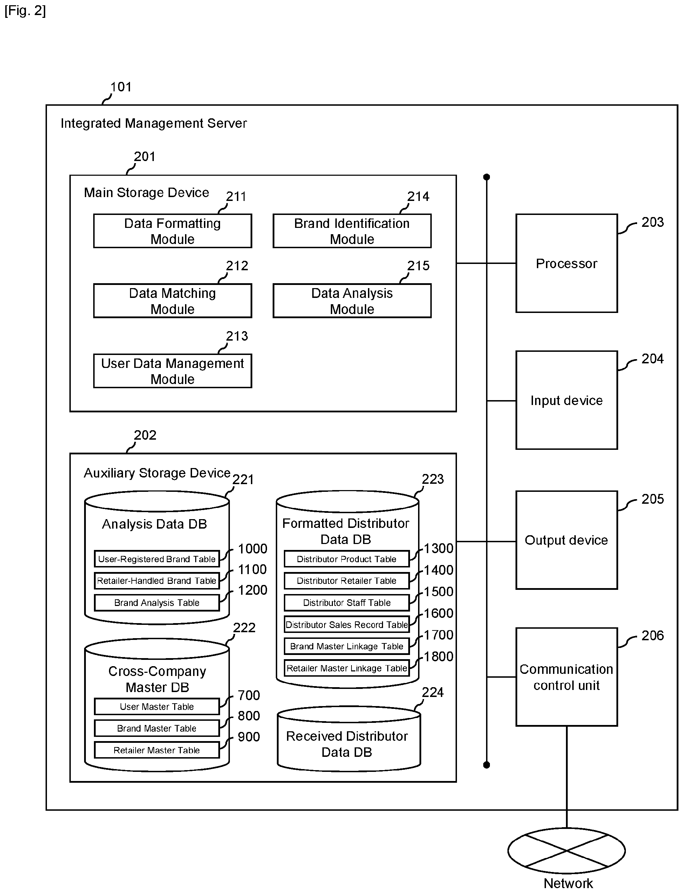

FIG. 2 is an example of a hardware configuration of Integrated Management Server 101.
Integrated Management Server 101 comprises, for example, servers arranged on a cloud.
Main Storage Device 201 stores programs and applications such as Data Formatting Module 211, Data Matching Module 212, User Data Management Module 213, Brand Identification Module 214, and Data Analysis Module 215. Each functional element of Integrated Management Server 101 is realized by Processor 203 executing these programs and applications.

Data Formatting Module 211 stores product information, retailer information, sales record information, and the like received from respective Distributor Terminal 102 in Received Distributor Data DB 224. Further, Data Formatting Module 211 formats the information received from each of Distributor Terminal 102 into a common unified format and stores them in Formatted Distributor Data DB 223.

Data Matching Module 212 matches the information stored in Formatted Distributor Data DB 223 with the information of Cross-Company Master DB 222. When product information or retailer information is corresponding to Brand Master Table 800 or Retailer Master Table 900 of Cross-Company Master DB 222, the IDs of the masters are stored in the table of Formatted Distributor Data DB 223.
If there is no corresponding information in Cross-Company Master DB 222, a new record is added to Cross-Company Master DB 222 based on the information in Formatted Distributor Data DB 223.

User Data Management Module 213 stores user information and information related to DRUNK-brands or WISH-to-DRINK brands, received from User Terminal 103, in User-Registered Brand Table 1000, and manages them. Brand Identification Module 214 identifies an alcoholic beverage brand that has been taken in an image based on the image or information related to the image received from User Terminal 103.
Data Analysis Module 215 generates useful information for users, distributors, and the like by analyzing information stored in Cross-Company Master DB 222 or Formatted Distributor Data DB 223, and provides the information to User Terminal 103, Distributor Terminal 102, or the like.

Auxiliary Storage Device 202 comprises databases such as Analysis Data DB 221, Cross-Company Master DB 222, Formatted Distributor Data DB 223, and Received Distributor Data DB 224.
Received Distributor Data DB 224 stores product information, retailer information, staff information, sales record information, or the like received from a plurality of Distributor Terminals 102. Formatted Distributor Data DB 223 stores product information, retailer information, sales record information, or the like received from Distributor Terminal 102 as information formatted in a common and unified format.

Cross-Company Master DB 222 stores master information of product information, retailer information, and user information, managed by Integrated Management Server 101.
Since the format, ID, and key information of the product information, retailer information, and sales record information received from Distributor Terminal 102 differ depending on each distributor, it is usually impossible to compare, process, and analyze the information of a plurality of Distributor Terminals 102 across the distributor as they are. In the present embodiments, these pieces of information are formatted by Data Formatting Module 211 and stored in Cross-Company Master DB 222 so that sales record information of plural distributors can be collectively processed, analyzed, and used. Analysis Data DB 221 stores the information which analyzed information of Cross-Company Master DB 222 or Formatted Distributor Data DB 223.

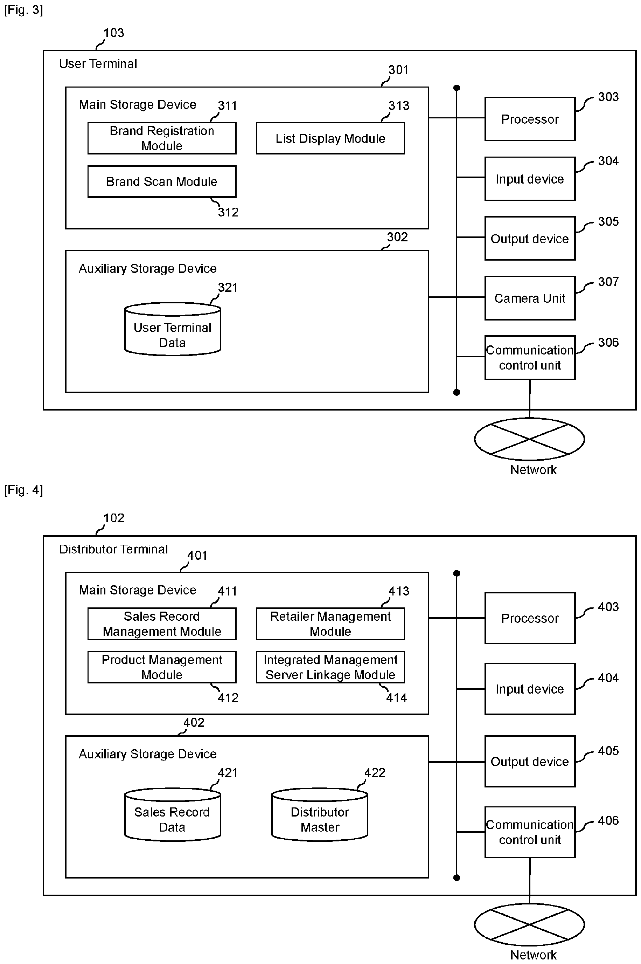

FIG. 3 is an example of a hardware configuration of User Terminal 103. User Terminal 103 is a terminal used by a user who purchases products such as alcoholic beverages from a restaurant or a retail store.
Main Storage Device 301 stores programs and applications such as Brand Registration Module 311, Brand Scan Module 312, and List Display Module 313, and each functional element of User Terminal 103 is realized by Processor 303 executing these programs and applications.

These modules are incorporated as sub-modules in one Alcoholic Beverage Information Management Application, and a user can use the functions of these modules by installing the application in a terminal such as a smartphone.

Brand Registration Module 311 registers DRUNK-brands, WISH-to-DRINK brands, and comments from a user.
Brand Scan Module 312 processes image information acquired by Camera Unit 307 and overlay-displays alcoholic beverage information on the photographed image in cooperation with Brand Identification Module 214 of Integrated Management Server 101. For example, an AR (Augmented Reality) function may be used to display.
List Display Module 313 displays brand information registered by the user, recommendation information, or the like sent from Integrated Management Server 101.

User Terminal Data 321, including DRUNK-brands, WISH-to-DRINK brands, comments, evaluations, or the like, is stored in Auxiliary Storage Device 302.

FIG. 4 is an example of a hardware configuration of Distributor Terminal 102. Distributor Terminal 102 is a terminal used by a distributor that wholesales products such as alcoholic beverages to restaurants or retail stores.
Main Storage Device 401 stores programs and applications such as Sales Record Management Module 411, Product Management Module 412, Retailer Management Module 413, Integrated Management Server Linkage Module 414, and the like. When Processor 403 executes these programs and applications, each functional element of Distributor Terminal 102 is realized.

Sales Record Management Module 411 registers and manages sales records of distributors in Sales Record Data 421.
Product Management Module 412 registers and manages product names of products sold and managed by each distributor and brand names of alcoholic beverages in Distributor Master 422. The master DB is not essential so whole product information and retailer information could be registered in the sales record data.
Retailer Management Module 413 registers and manages information of retailers to which distributors sell products such as alcoholic beverages in Distributor Master 422.

Integrated Management Server Linkage Module 414 sends the Sales Record Data 421, product information, and retailer information of Distributor Master 422 stored in Auxiliary Storage Device 402 to Integrated Management Server 101 periodically, each time the information is updated, or any time. Instead of a dedicated application, a Web browser might send the information to Integrated Management Server by simply accessing and linking to the server.

Auxiliary Storage Device 402 stores Sales Record Data 421 and Distributor Master 422 that includes product information, retailer information, and the like. These pieces of information are basically managed in different ways, formats, ID information, and key information by each distributor such as distributor P, Q, or R in FIG. 1.

Sales Record Information, which is distributors' sales result to each retailer, includes information on what products were sold together to which retailers. The product information and retailer information might be included in the sales record information, or be managed in other masters being linked to the sales record information by ID information, etc. FIG. 4 shows an instance where Sales Record Data 421 only includes sales results, while Distributor Master 422 includes product information and retailer information Distributor Master 422. Distributor Master 422 might include sales results, product information, and retailer information on the other hand.

Therefore, in the present specification, the term "sales record information" is described as including not only sales results which is a so-called sales record but also "product information" and "retailer information" corresponding to the sales results. However, depending on the context, the information may be separately described as product information, retailer information, and sales record information. Even in this case, "sales record information" may include the product information and the retailer information.

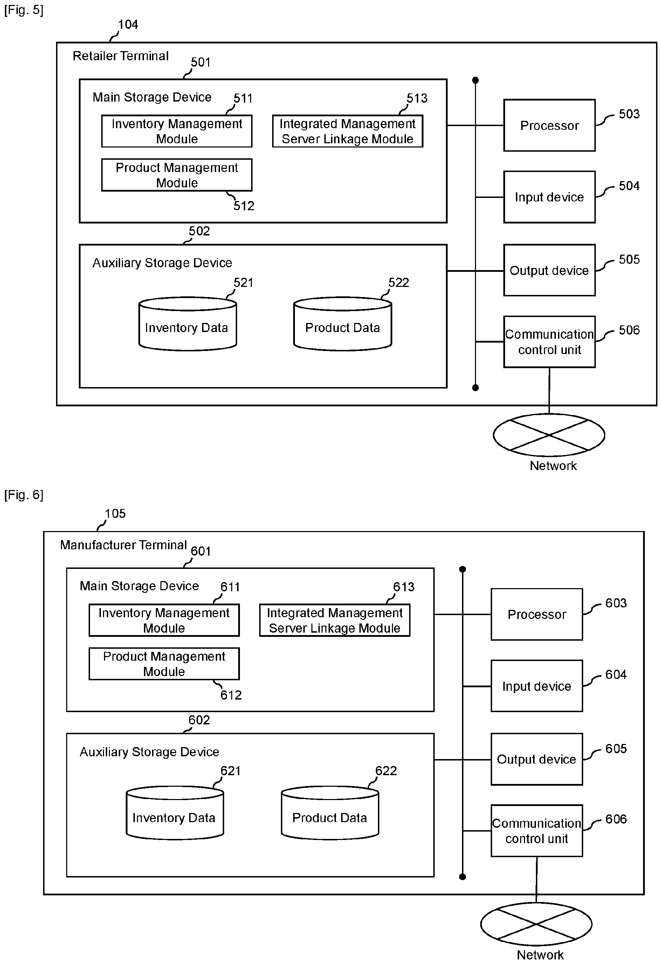

FIG. 5 is an example of a hardware configuration of Retailer Terminal 104. Retailer Terminal 104 is a terminal owned or used by a retailer, such as a restaurant or a retail store, that purchases products or alcoholic beverages from a distributor and sells them to consumers.
Main Storage Device 501 stores Inventory Management Module 511, Product Management Module 512, programs and applications such as Integrated Management Server Linkage Module 513. Processor 503 enables each functional element of Retailer Terminal 104 by executing these programs and applications.

Inventory Management Module 511 registers and manages inventory and sales information of products such as alcoholic beverages handled in retailers, such as restaurants and retail stores, in Inventory Data 521. Product Management Module 512 registers and manages product names and brand names of products handled in retailers in Product Data 522.

Integrated Management Server Linkage Module 513 sends Inventory Data 521 or Product Data 522, stored in Auxiliary Storage Device 502, to Integrated Management Server 101 periodically or each time the data is updated.

When Inventory Data 521 is updated and a product become out of stock, Integrated Management Server Linkage Module 513 can cooperate with Integrated Management Server 101 to rewrite stockout risk of the product, to the latest status such as "stockout presumed", on Retailer-Handled Brand Table 1100 in Analysis Data DB.
Integrated Management Server Linkage Module 513 outputs brand information, analysis information, and the like sent from Integrated Management Server 101. Instead of a dedicated application, a Web browser might send the information to Integrated Management Server by simply accessing and linking to the server.
Auxiliary Storage Device stores inventory data of restaurants or retail stores.

FIG. 6 is an example of a hardware configuration of Manufacturer Terminal 105.
Manufacturer Terminal 105 is a terminal used by a company that manufactures and sells products such as alcoholic beverages.
Main Storage Device 601 stores Inventory Management Module 611, Product Management Module 612, programs and applications such as Integrated Management Server Linkage Module 613. The processor 603 enables each functional element of Manufacturer Terminal 105 by executing these programs and applications.

Inventory Management Module 611 registers and manages inventory and sales information of products, produced and sold by manufacturers, in Inventory Data 621.
Product Management Module 612 registers and manages product names or brand names of products produced and sold by manufacturers.

Integrated Management Server Linkage Module 613 sends the Product Data 622, stored in Auxiliary Storage Device 602, to Integrated Management Server 101 periodically, each time the information is updated, or any time. Instead of a dedicated application, a Web browser might send the information to Integrated Management Server by simply accessing and linking to the server.

When contents of Brand Master Table 800, managed by Integrated Management Server 101, is inaccurate or needs to be updated, Integrated Management Server Linkage Module 613 can rewrite the contents of Brand Master Table 800 in cooperation with Integrated Management Server 101. Auxiliary Storage Device 602 stores Product Data 622 including product names, brand names, related information, and images of products or brands, such as alcoholic beverages, produced and sold by manufacturers.

Although not shown in the figures, Other Vendor Terminal 106 has a similar hardware configuration to that of Manufacturer Terminal 105.
Other Vendor Terminals 106 are terminals owned or used by companies in a supply chain of products such as alcoholic beverages.
Main Storage Device stores Inventory Management Module, Product Management Module, programs and applications such as Integrated Management Server Linkage Module. Its Processor enables each functional element of Other Vendor Terminal 106 by executing these programs and applications.

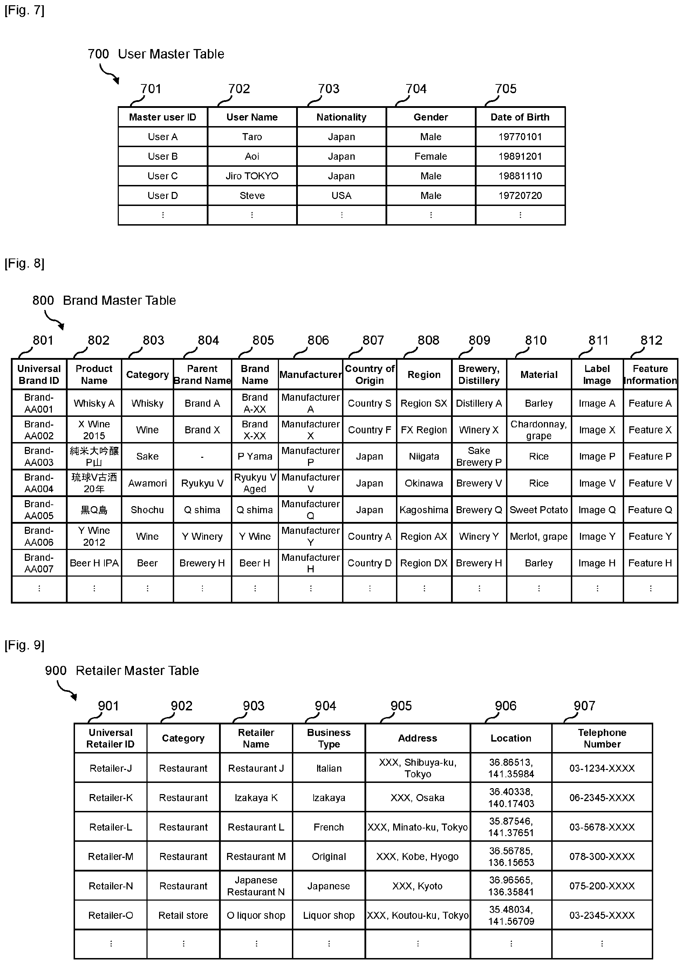

FIGS. 7 to 9 are illustrative of various tables stored in Cross-Company Master DB 222 on Auxiliary Storage Device 202 in Integrated Management Server 101.
FIG. 7 is an example of User Master Table 700.
User Master Table 700 stores information of users using User Terminal 103. User Master Table 700 includes Master User ID 701 that is used in a unified manner throughout Management System, also includes information such as User Name 702, Nationality 703, Gender 704, or Date of Birth 705. Each user may also store a login password for using an application of User Terminal 103, address information, payment information such as credit card information, and the like.

FIG. 8 illustrates an exemplary Brand Master Table 800, stored in Cross-Company Master DB 222.
Brand Master Table 800 is a table for managing brand information and related information of alcoholic beverages managed by Management System 1. In FIG. 8, alcoholic beverages are described as an example, but the present invention is not only for alcoholic beverages, but also for other beverages, foods, and products.
Brand Master Table 800 includes Universal Brand ID 801, unified and used throughout Management System, and related information such as Product Name 802, Category 803, Parent Brand Name 804, Brand Name 805, Manufacturer 806, Country of Origin 807, Region 808, Brewery, Distillery 809, Material 810, Label Image 811, or Feature Information 812.

Feature Information 812 is feature information extracted from images of each brand, which includes, for example, shape or color of the bottle, shape or color of the label, content or character of the logo on the label, coordinate or positional information obtained by extracting the characteristic point from these pieces of information, or numerical or categorical information extracted by processing all or part of these pieces of information with a specific algorithm. Other information is applicable if it can be referenced and compared for identifying brands of alcoholic beverages.

Contents of Brand Master Table 800 are added and updated by Data Matching Module 212 of Integrated Management Server 101 based on product information and the sales record information received from Distributor Terminal 102. Distributor Terminal 102 may update the contents via Integrated Management Server Linkage Module 414. Further, Manufacturer Terminal 105 may update the contents via Integrated Management Server Linkage Module 613.

FIG. 9 is an example of Retailer Master Table 900 stored in Cross-Company Master DB 222.
Retailer Master Table 900 is a table for managing retailer information and related information of retailers, such as restaurants and retail stores, managed in Management System 1.
Retailer Master Table 900 includes Universal Retailer ID 901 that is unified and used throughout Management System and related information such as Category 902, Retailer Name 903, Business Type 904, Address 905, Location 906, Telephone Number 907.

Category 902 indicates the type of each retailer: a restaurant or a retail store. Business type 904 indicates a genre or the like of a restaurant or the like. Position 906, such as latitude and longitude, is for specifying retailer position on the map.

Contents of Retailer Master Table 900 are added and updated by Data Matching Module 212 of Integrated Management Server 101 based on retailer information and sales record information received from Distributor Terminal 102. Distributor Terminal 102 may update the contents via Integrated Management Server Linkage Module 414. Retailer Terminal 104 may also update the contents via Integrated Management Server Linkage Module 513.

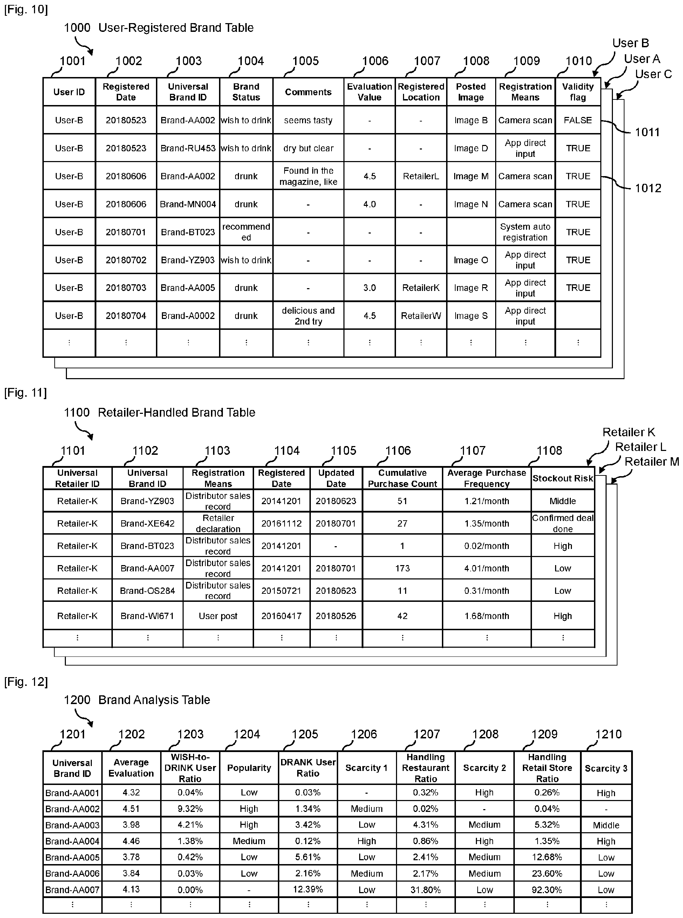

FIGS. 10 to 12 are examples of various tables stored in Analysis Data DB 221 of Auxiliary Storage Device 202 of Integrated Management Server 101. FIG. 10 is an example of User-Registered Brand Table 1000.
User-Registered Brand Table 1000 is a table for managing information which is sent from each User Terminal 103 such as "drank ", "wish-to-drink", evaluation, comments towards brands of alcoholic beverages.

User-Registered Brand Table 1000 includes information such as User ID 1001, Registered Date 1002, Universal Brand ID 1003, Brand Status 1004, Evaluation Comment 1005, Evaluation Value 1006, Registered Location 1007, Posted Image 1008, Registration Means 1009, or Validity 1010.
User ID 1001 contains the IDs of User Master Table 700, managed in Cross-Company Master DB 222. Universal Brand ID 1003 contains the IDs of Brand Master Table 800, also managed in Cross-Company Master DB 222.

Brand Status 1004 contains information indicating that a brand, registered by User Terminal 103, is "drunk" or "wish to drink" by the user or is "recommended" to the user by the system according to the user's preference or the like.

Registered Location 1007 contains a location in which information is registered, such as a restaurant name, a retailer name, an outside place name, or 'home'. In the case of registering a retailer name, the value of names in Retailer Master Table 900 is initially suggested as a candidate. Registration Means 1009 contains a means for registering the information, such as "thru an image posted by the user", "thru a direct input by the user", or "automatic registration by the system".

Valid flag 1010 is a flag for managing invalid data such as duplicated information. For example, when user B registered brand AA002 as a "wish-to-drink" brand on May 23, 2018 (1011) and the same brand AA002 as a "drank" brand on June 6, 2018 (1012), the validity flag might be set to FALSE since the "wish-to-drink" information is old information. Information in which the value of the flag is FALSE would not be displayed in the subsequent display process.

The same information as that of User-Registered Brand Table 1000 for each user is also stored in User Terminal Data 321 of User Terminal 103. List Display Module 313 can display the information registered based on User Terminal Data 321 on User Terminal 103.

Fig. 11 is an example of Retailer-Handled Brand Table 1100. Retailer-Handled Brand Table 1100 is a table for managing which brand of alcoholic beverages is handled in which store. The content is created based on sales record data sent from Distributor Terminal 102.

Retailer-Handled Brand Table 1100 contains Universal Retailer ID 1101, Universal Brand ID 1102, Registration Means 1103, Registered Date 1104, Updated Date 1105, Cumulative Purchase Count 1106, Average Purchase Frequency 1107, Stockout Risk 1108, etc.
Universal Retailer ID 1101 contains the IDs of Retailer Master Table 900, managed in Cross-Company Master DB222. Universal Brand ID 1102 contains IDs of Brand Master Table 800, also managed in Cross-Company Master DB 222.

Registration Means 1103 contains a means for registering the information such as "Distributor Sales Record", "Retailer Declaration", "User Post". "Distributor Sales Record" is applied when the information is created based on Distributor Sales Record Table 1600, formatted sales records received from Distributor Terminal 102.
"Retailer Declaration" is applied when the information is registered or updated by Integrated Management Server Linkage Module 513 of Retailer Terminal 104.
"User Post" is applied when the information is registered or updated by Brand Registration Module 311 and Brand Scan Module 312 of User Terminal 103.

The Registered Date 1104 contains dates on which each record was registered. The date is, for example, the earliest sold date based on distributor sales records, the first reported date based on retailer reports, or the first posted date based on user posts.
Updated Date 1105 contains dates on which each record was updated. The date is, for example, the latest sold date based on distributor sales records, the latest reported date based on retailer reports, and the latest posted date based on user posts.

Cumulative Purchase Count 1106 contains a cumulative count of purchases from Registered Date 1104 to Updated Date 1105. It may not contain a cumulative count of purchases but contain the number of purchased alcoholic beverage bottles.
Other value, such as "liter" or "barrel", is applicable when the value can show the "amount" of the cumulative purchase.

Average Purchase Frequency 1107 contains Cumulative Purchase Count 1106 divided by the elapsed period from Registered Date 1104 to Updated Date 1105. As another example, if Cumulative Purchase Count 1106 is managed by the number of purchased bottles instead of the count of purchases, Cumulative Purchase Frequency 1107 is the number of purchased bottles per month.

Stockout Risk 1108 contains risks of out-of-stock of each brand at a retailer. The risk is calculated and evaluated based on, for example, Average Purchase Frequency 1107 or the elapsed time since the latest information was registered.

FIG. 12 shows an example of Brand Analysis Table 1200.
Brand Analysis Table 1200 is a table for storing the evaluation, popularity, and scarcity of each brand.
Brand Analysis Table 1200 stores Universal Brand ID 1201, Average Evaluation 1202, WISH-to-DRINK User Ratio 1203, DRANK User Ratio 1205, Handling Restaurant Ratio 1207, the Handling Retail Store Ratio 1209, and so on. Based on these values, Popularity 1204, Scarcity 1206, 1208, and 1210 are calculated and stored together.

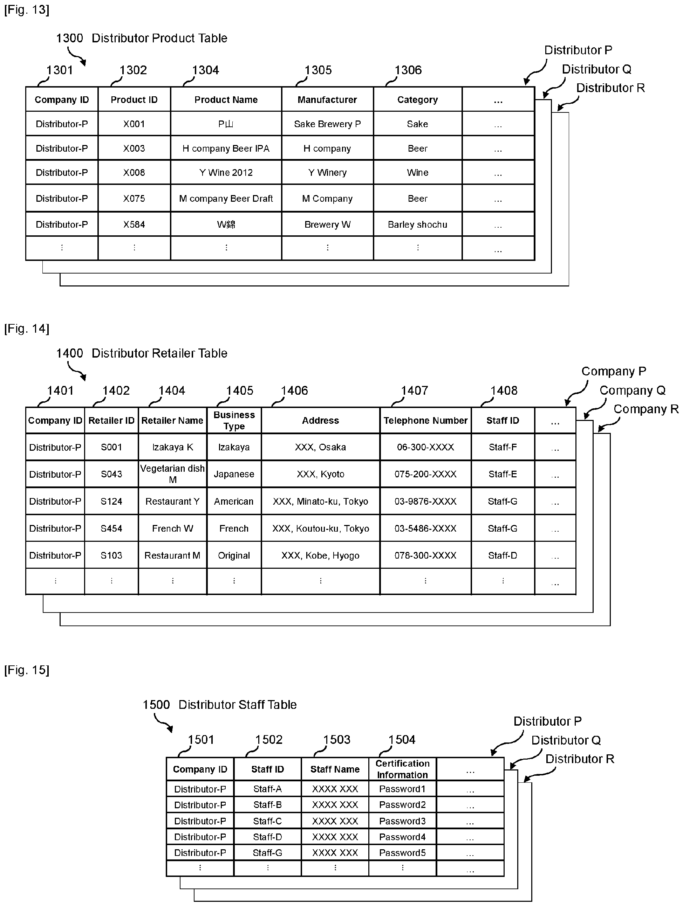

FIGS. 13-18 are illustrative of various tables stored in Formatted Distributor Data DB 223.
Each distributor (P, Q, or R in Fig. 1) manages its products, retailers, and sales record in its own format, order, and content. Each of the information received from the Distributor Terminal 102 is formatted in a common format by Data Formatting Module 211 and is stored in Formatted Distributor Data DB 223 as FIGS. 13 to 16. Storing each distributor's data in the common format enables to carry out various data analyses across multiple distributors. Analyzed data is stored in Analysis Data DB 221 and is sent to User Terminal 103 and others.

Formatted Sales record information, includes product information, retailer information, and staff information associated with the sales record, stored in Formatted Distributor Data DB 223 may be referred to as Universal Sales Record Information. The Universal Sales Record Information indicates it includes all of the various tables as shown in FIGS. 13 to 16, which are stored in Formatted Distributor Data DB 223.

FIG. 13 is an example of Distributor Product Table 1300.
Distributor Product Table 1300 is a table for managing products handled by each distributor and information related to the products.
Distributor Product Table 1300 stores product information such as Company ID 1301, Product ID 1302, Product Name 1304, Manufacturer 1305, and Category 1306.

Company ID 1301 is for identifying distributors P, Q, R, etc. as in Fig. 1. The Product ID 1302, which is for identifying products, is managed by the distributor. The ID is linked to Universal Brand ID 801, contained in Brand Master Table 800 in Cross-Company Master DB 222 of Integrated Management Server 101, by Brand Master Linkage Table 1700.

FIG. 14 is an example of Distributor Retailer Table 1400.
Distributor Retailer Table 1400 is a table for managing retailer information and related information of retailers such as restaurants and retail stores. Distributor Retailer Table 1400 stores retailer information such as Company ID 1401, Retailer ID 1402, Retailer Name 1404, Business Type 1405, Address 1406, Telephone Number 1407, Staff ID 1408, etc.

Retailer ID 1402, which is for identifying retailers, is managed by the distributor. The ID is linked to Universal Retailer ID 901, contained in Retailer Master Table 900 of Cross-Company Master DB222 of Integrated Management Server 101, by Retailer Master Linkage Table 1800.

FIG. 15 is an example of a Distributor Staff Table 1500.
The Distributor Staff Table 1500 is a table for managing information of distributor staff in charge of their customer retailers.
The Distributor Staff Table 1500 stores staff information, such as Company ID 1501, a Staff ID 1502, a Staff Name 1503, and Certification Information 1504.

Each staff logs in to Integrated Management Server Linkage Module 414 based on Authentication Information 1504, sends and receives data to and from Integrated Management Server 101, receives analysis results, and rewrites information on Cross-Company Master DB222.

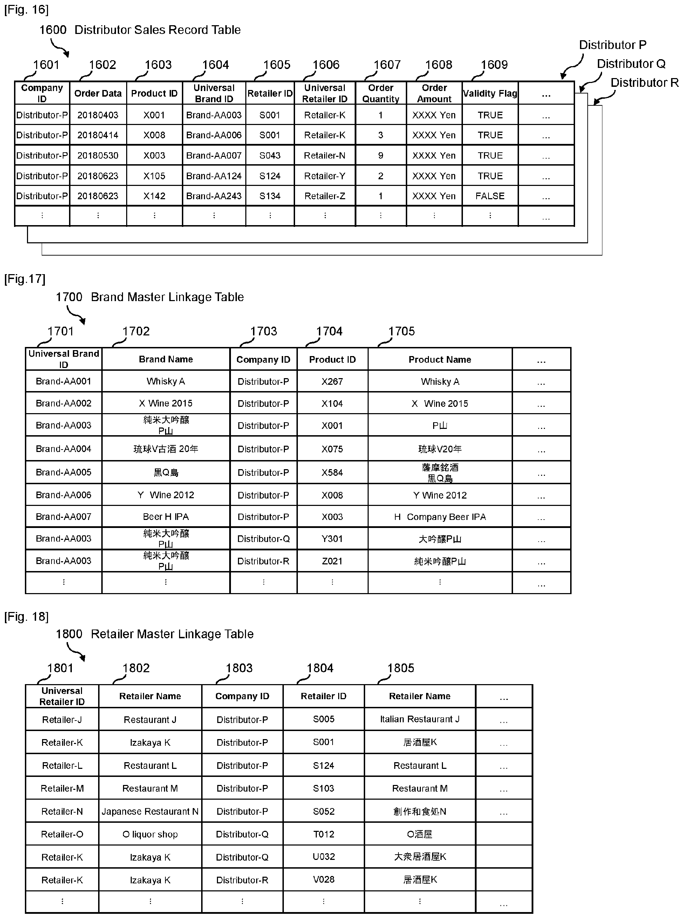

FIG. 16 is an example of Distributor Sales Record Table 1600.
Distributor Sales Record Table 1600 is a table for managing the sales results of each distributor.
Distributor sales record table 1600 stores sales record information such as Company ID 1601, Order Date 1602, Product ID 1603, Universal Brand ID 1604, Retailer ID 1605, Universal Retailer ID 1606, Order Quantity 1607, Order Amount 1608, Validity Flag 1609, etc.

Order Date 1602 describes a date on which the order was received for the product. Basically, a new record is added to Sales Record Table each time new order has been received.
Company ID 1601 and Product ID 1603 are managed by the distributor. Universal Brand ID 1604 contains ID linked to Universal Brand ID 801, stored in Brand Master Table 800 of Cross-Company Master DB222 of Integrated Management Server 101, to identify the same product. Universal Retailer ID 1606 contains ID linked to Universal Retailer ID 901, stored in Retailer Master Table 900 of Cross-Company Master DB222 of Integrated Management Server 101, to identify the same retailer.

The system does not have to have the value of both Product ID 1603 and Universal Brand ID 1604. Either-or might be fine as long as the information is associated with each other as in Brand Master Linkage Table 1700 of FIG. 17.
Similarly, the system does not have to have the value of both Retailer ID 1605 and Universal Retailer ID 1606. Either-or might be fine as long as the information is associated with each other as in Retailer Master Linkage Table 1800 of FIG. 18.
Validity 1609 contains a flag showing validity of the record. FALSE is applied to invalid data such as cancel orders.

FIG. 17 is an example of Brand Master Linkage Table 1700.
Brand Master Linkage Table 1700 links Universal Brand ID 801 in Brand Master Table 800 to Product ID 1302, named by each distributor, in Distributor Product Table 1300 in Cross-Company Master DB 222.
Brand Master Linkage Table 1700 enables Data Matching Process 2000 to store Universal Brand ID 1604 in association with Product ID 1603 in Distributor Sales Record Table.

FIG. 18 is an example of Retailer Master Linkage Table 1800.
Retailer Master Linkage Table 1800 links Universal Retailer ID 901 in Retailer Master Table 900 to Retailer ID 1402, named by each distributor, in Distributor Retailer Table 1400 in Cross-Company Master DB 222. Retailer Master Linkage Table 1800 enables Data Matching Process 2000 to store Universal Retailer ID 1606 in association with Retailer ID 1605 in Distributor Sales Record Table.

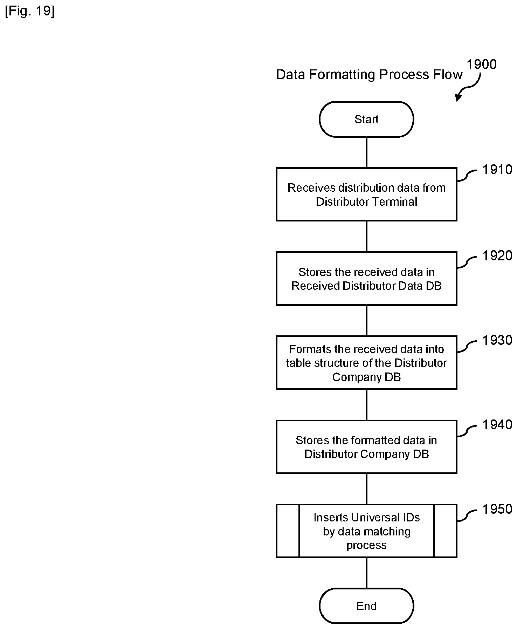

FIGS. 19 to 25 show the flow of various processes performed by Management System 1.
FIG. 19 is an example of Data Formatting Process Flow 1900 executed by Data Formatting Module 211 of Integrated Management Server 101.

In step 1910, Data Formatting Module 211 receives distribution data such as sales record information, product information, or retailer information from Distributor Terminal 102. The received data has product information, retailer information, and sales results in a unique format, order, and content of each distributor (distributor P, Q, and R in Fig. 1).
The module stores the received data in Received Distributor Data DB 224 (step 1920).

The module rearranges columns of the received data or replaces the received data, and formats the received data into the same common format (table structure), such as Distributor Product Table 1300, Distributor Retailer Table 1400, and Distributor Sales Record Table 1600 of Formatted Distributor Data DB 223 (step 1930). That is, the received data is added to these tables as a new record by adjusting the data format to these table structures.

The module then stores the formatted data in Formatted Distributor Data DB 223 (step 1940).
Then, Data Matching Module 212 performs the matching process. The data matching process inserts Universal IDs of Cross-Company Master DB 222 to each record of the formatted tables by matching and aggregating the names in the data (Step 1950).

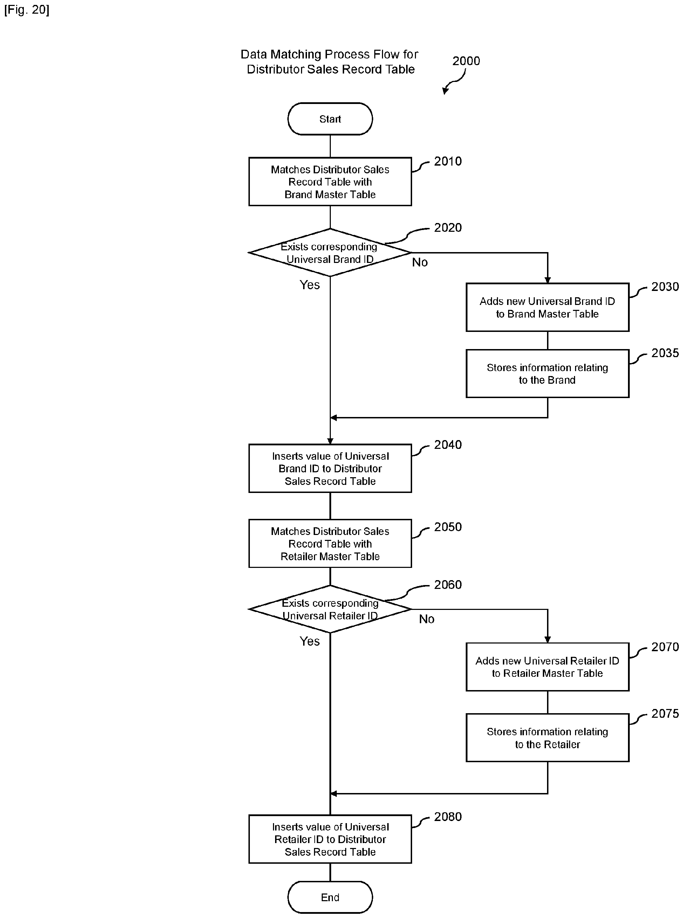

FIG. 20 is an example of Data Matching Process Flow 2000. Distributor Sales Record Table 1600, formatted data which is received from Distributor Terminal 102, is matched with the information of Cross-Company Master DB 222. Distributor Sales Record Table 1600

In step 2010, Data Matching Module 212 matches Distributor Sales Record Table 1600 of Formatted Distributor Data DB 223 with Brand Master Table 800 of Cross-Company Master DB 222. At this time, Brand Master Linkage Table 1700 is also referred to.

The module checks whether there is a Universal Brand ID corresponding to the product in Distributor Sales Record Table 1600. That is, the module determines whether Distributor Product Table 1300, associated with Product ID 1603, has a product corresponding to the brand managed in Brand Master Table 800 in step 2020.

For example, the module searches Brand Master Table 800 based on information related to the product such as its product name, manufacturer name, or category stored in Distributor Product Table 1300, and acquires corresponding Universal Brand ID if there is a similar product or brand. This acquisition may be performed not only when a brand has the same name, but also when a brand has a high degree of similarity. Similar products and brands may also be specified or be extracted by matching or retrieving based on keywords of the table, or by matching information of Brand Master Table 800 with information of Distributor Product Table 1300 based on iterative calculations by Al, machine learning, deep learning, or the like.

Product master information of distributors such as Distributor Product Table 1300 is not an essential configuration. Product information, managed by a distributor, may be managed directly in the sales record information. In such cases, the product information in the sales record information is matched with the information in Brand Master Table 800.
When linkage information such as Brand Master Linkage Table 1700 is provided, it is only necessary to confirm whether the value of Product ID 1603 has been registered in Brand Master Linkage Table 1700.

If the corresponding Universal Brand ID exists, Data Matching Module 212 inserts the value of Universal Brand ID to the corresponding record of Distributor Sales Record Table 1600 in step 2040.

If the corresponding Universal Brand ID does not exist, Data Matching Module 212 adds a new Universal Brand ID to Brand Master Table 800 (step 2030), associates the ID with the corresponding product information in Distributor Product Table 1300, and stores them (step 2035).
If there is insufficient information as the master information, the module may acquire and supplement the insufficient information by inquiring to Manufacturer Terminal 105 or by searching on the Internet and may store the information in Brand Master Table 800.

The module may also acquire and store a label image, generate feature information for specifying a product or a brand based on the label image or the like, and store the feature information with the label image.
The feature information is information extracted from an entire image of a product or a label image, such as a shape or a color of a bottle, a shape or a color of a label, a content or a shape or a color of a logo/characters on a label, coordinate information or positional information obtained by extracting feature points from the information, or numerical information or data extracted by processing all or part of the information with a specific algorithm. Other information is applicable if that can be referenced or be compared for identifying brands of alcoholic beverages.

In step 2040, Data Matching Module 212 stores the newly added Universal Brand ID in Distributor Sales Record Table 1600.
When linkage information such as Brand Master Linkage Table 1700 is provided, the newly added Universal Brand ID is stored in association with Product ID 1704.

In step 2050, Data Matching Module 212 matches Distributor Sales Record Table 1600 of Formatted Distributor Data DB 223 with Retailer Master Table 900 of Cross-Company Master DB 222. At this time, Retailer Master Linkage Table 1800 is also referred to.
The module checks whether there is a Universal Retailer ID corresponding to the retailer in Distributor Sales Record Table 1600. That is, the module determines whether Distributor Retailer Table 1400, associated with Retailer ID 1605, has a retailer corresponding to the store managed in Retailer Master Table 900 in step 2060.

For example, the module searches Retailer Master Table 900 based on information related to the retailer such as its name, business type, address, or telephone number stored in Distributor Retailer Table 1400, and acquires corresponding Universal Retailer ID if there is a similar retailer. This acquisition may be performed not only when a retailer has the same name, but also when a retailer has a high degree of similarity. Similar retailers may also be specified or be extracted by matching or retrieving based on keywords of the table, or by matching information of Retailer Master Table 900 with information of Distributor Retailer Table 1400 based on iterative calculations by Al, machine learning, deep learning, or the like.

Retailer master information of distributors such as Distributor Retailer Table 1400 is not an essential configuration. Retailer information, managed by distributors, may be managed directly in the sales record information. In such cases, the retailer information in the sales record information is matched with the information in Brand Master Table 800. When linkage information such as Retailer Master Linkage Table 1800 is provided, it is only necessary to confirm whether the value of Retailer ID 1605 has been registered in Retailer Master Linkage Table 1800.

If the corresponding Universal Retailer ID exists, Data Matching Module 212 inserts the value of Universal Retailer ID to the corresponding record of Distributor Sales Record Table 1600 in step 2080.

If the corresponding Universal Retailer ID does not exist, Data Matching Module 212 adds a new Universal Retailer ID to Retailer Master Table 900 (step 2070), associates the ID with the corresponding retailer information in Distributor Retailer Table 1400, and stores them (step 2075).
If there is insufficient information as the master information, the module may acquire and supplement the insufficient information by inquiring to Retailer Terminal 104 or by searching on the Internet and may store the information in Retailer Master Table 900.

In step 2080, Data Matching Module 212 stores the newly added Universal Retailer ID in Distributor Sales Record Table 1600.
When linkage information such as Retailer Master Linkage Table 1800 is provided, the newly added Universal Retailer ID is stored in association with Retailer ID 1804.

Data Matching Module 212 cooperates with Distributor Terminal 102 or the like to determine whether orders, stored in records of Distributor Sales Record Table, are valid or not.
The module sets Validity 1609 to TRUE if the order is valid, and sets it to FALSE if the order is not valid.
This enables later data analysis or the like to use only transaction information of valid orders.

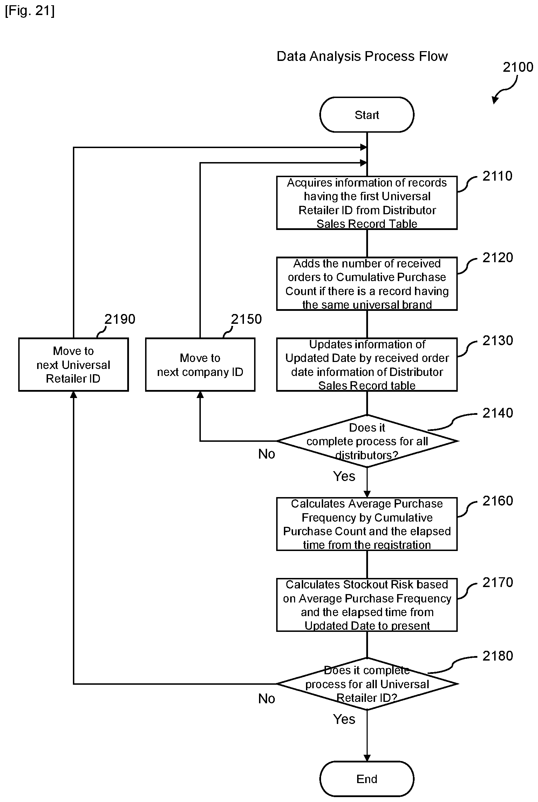

FIG. 21 is an example of Data Analysis Process Flow 2100 for analyzing the status of brands of alcoholic beverages handled in retailers based on Distributor Sales Record Table 1600, and for generating Retailer-Handled Brand Table 1100 of Analysis Data DB 221.
In step 2110, Data Analysis Module 215 of Integrated Management Server 101 acquires all the information of records having Universal Retailer ID to be analyzed from Distributor Sales Record Table 1600.

If the acquired record has the same Universal Brand ID, the module adds the number of orders received to Cumulative Purchase Count in step 2120. In the example in Table 1100 for each store in Fig. 11, a list of brands handled at retailer K is generated, and Cumulative Purchase Count 1106 of each brand is calculated.
When Registered Date and Updated Date are already stored in Retailer-Handled Brand Table 1100, the number of purchases is incremented by the number of orders received after the latest updated date.

In step 2130, the module updates Updated Date 1105 of Retailer-Handled Brand Table 1100 with the value of Order Date 1602 of the record where Cumulative Purchase Count was incremented by the number of orders. The module determines if a process has been completed for all distributors, step 2140. If the process has not been completed, the same process is repeated until it is completed for all Company ID 1601 in Distributor Sales Record Table 1600 in operation 2150. This makes it possible to generate a list of brands handled at retailer K by integrating distribution data, such as product information, retailer information, and sales record information, acquired from multiple distributors P, Q, and R.

When the content of Retailer-Handled Brand Table 1100 is generated based on the above-described Distributor Sales Record, Data Analysis Module 215 sets "Distributor Sales Record" in Registration Means 1103.

When the content is registered and updated by Integrated Management Server Linkage Module 513 of Retailer Terminal 104, "retailer declaration" is set in Registration Means 1103. When the content is registered and updated by Brand Registration Module 311 or Brand Scan Module 312 of User Terminal 103, "user post" is set.

In step 2160, Data Analysis Module 215 calculates Average Purchase Frequency 1107 by dividing Cumulative Purchase Count 1106 by the elapsed time between Registered Date 1104 and Updated Date 1105. Instead of the elapsed time from Registered Date 1104 to Updated Date 1105, the elapsed time from Registered Date 1104 to the present may be used.

In step 2170, Data Analysis Module 215 calculates and stores Stockout Risk 1108 based on Average Purchase Frequency 1107 and the elapsed time from Updated Date 1105 (i.e., the last order reception date) to the present (step 2170). For example, Stockout Risk 1108 is calculated by comparing the inverse of Average Purchase Frequency 1107 (i.e., the number of months spent to consume an amount of order) with the elapsed time.
For example, Stockout Risk can be calculated by the following.
If an elapsed period exceeds the number of months spent to consume an amount of one order, Stockout Risk shall be high.
If the elapsed period is less than half the number of months, the risk is low. If the elapsed period exceeds half the number of months but does not exceed the number of months, the risk is middle.
If one year or more has elapsed, the risk shall be high.

Stockout Risk 1108 can be updated by Integrated Management Server Linkage Module 513 of Retailer Terminal 104. When the module determines that a retailer has consumed a purchased brand of alcoholic beverages, Stockout Risk can be rewritten to "stockout presumed".

Data Analysis Module 215 determines whether a process has been completed for all Universal Retailer ID 1606 (step 2180). If the process has not been completed for all the retailers, the same process is repeated until the processing is completed for all the IDs in Distributor Sales Record Table 1600 in step 2190. This makes it possible to generate a list of brands handled at each store and to estimate stockout risk of the brands by integrating Sales Record Information, including product information, retailer information, and sales record information, acquired from multiple distributors P, Q, and R

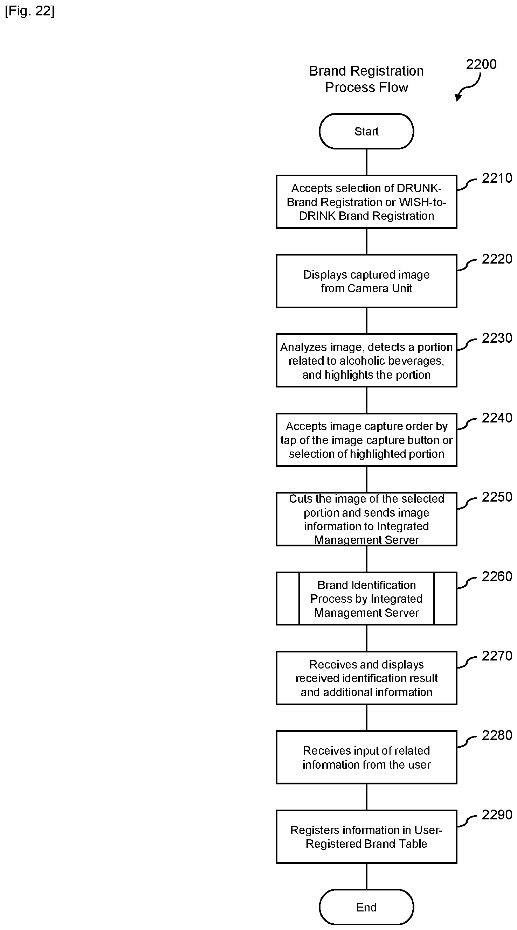

FIG. 22 is an example of Brand Registration Process Flow 2200 in which Brand Registration Module 311 of User Terminal 103 registers user information relating to alcoholic beverages.

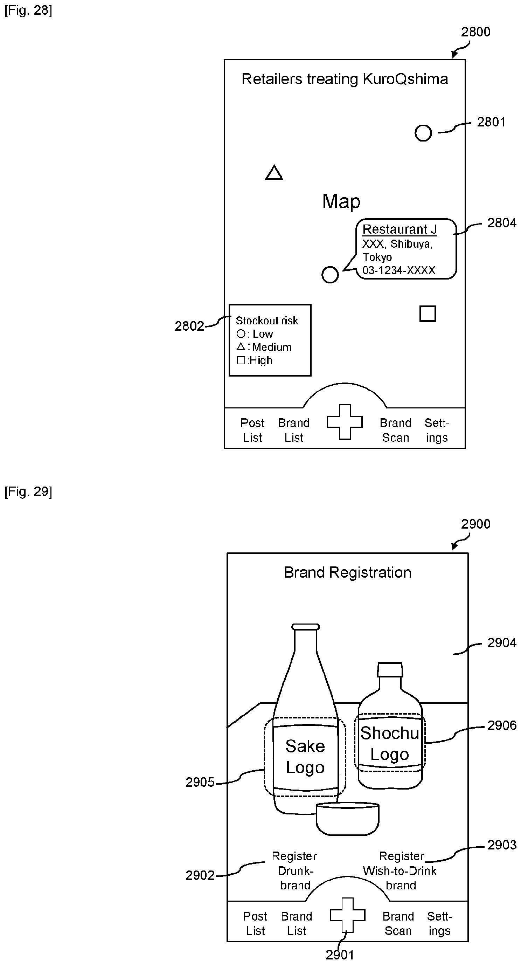

FIG. 29 is an example of screen 2900 displayed during the Brand Registration Process.
When an alcoholic beverage information management application receives a brand registration order from a user, Brand Registration Module 311 starts the process. For example, when plus mark 2901 at the lower-middle of the screen example on FIG. 29 is tapped, Brand Registration Module 311 is activated to start the process.

Brand Registration Module 311 displays DRUNK-Brand Registration Button 2902 and WISH-to-DRINK Brand Registration Button 2903 at the lower-middle of the screen on FIG. 29 and accepts selection of DRUNK-Brand Registration or WISH-to-DRINK Brand Registration from the user (step 2210). In step 2220, an image 2904 captured by Camera Unit 307 is displayed on the background of the screen.
The selection of the button may be accepted by detecting tapping on each button or by detecting flicking or swiping direction to the left button or right button, appeared by tapping a plus mark in FIG. 29.

In step 2230, Brand Registration Module 311 analyzes a displayed image, detects a portion related to alcoholic beverages, and highlights the portion. For example, by detecting the shape or color of its bottle, shape or color of its label, the portion is highlighted as a candidate for alcoholic beverages. The module receives image acquisition orders from users (step 2240). For example, a tap of the image capture button of plus mark 2901 at the lower-middle of the screen in FIG. 29, a tap of the highlight portion 2905 or 2906, or the like is accepted as an image acquisition order.

In step 2250, the module cuts out the image of the portion selected for brand identification and sends the image information to Integrated Management Server 101.
As shown in FIG. 29, in a case where plural liquors are displayed on the screen and there are plural highlight portions, and in a case where an image acquisition order is accepted by tapping plus mark 2901, the module cuts out the images of plural highlight portions and subsequently accepts a selection of the images from the user.
When one highlight portion is tapped from plural highlight portions the image of the highlight portion may be cut out.

Any image is applicable as a cut-out image if it has sufficient information to identify brands of alcoholic beverages including, an image of the label portion, a part of a logo or a name in the label, or an image of the entire bottle. When it is not necessary to care about the limitation of data traffic, a whole captured image may be sent to Integrated Management Server 101 without cutting out.

In step 2260, Brand Identification Module 214 of Integrated Management Server 101 receives an image, identifies the brand of alcoholic beverages in the received image, and sends the determination result and additional information related to the identified brand to User Terminal 103.
In step 2270, Brand Registration Module 311 of User Terminal 103 displays the received determination result and additional information on Display 305 or the like.

In step 2280, the module receives input of information related to the identified brand, such as an evaluation of the brand, a comment on the brand, or a name of the retailer.
In step 2290, the module stores the photographed image, the information identifying the brand such as brand ID or brand name, and brand-related information such as the evaluation, the comment, and the retailer name together in User Terminal Data 321 of the user storage device and User-Registered Brand Table 1000 of Analysis Data DB of Integrated Management Server 101.

The module sets DRANK in Brand Status 1004 of User-Registered Brand Table 1000 when DRUNK-Brand Registration Button 2902 is pressed. WISH-to-DRINK is set in Brand Status 1004 when WISH-to-DRINK Brand Registration Button 2903 is pressed.
Registered Location 1007 stores a location, a retailer name, Retailer ID, and the like specified from GPS information and the like of the location where the brand registration has been performed. The retailer name and Retailer ID can be acquired by comparing the location information acquired by GPS with Location 906 in Retailer Master Table 900. For stores that have not yet been registered, only the location information may be stored or entered by the user.

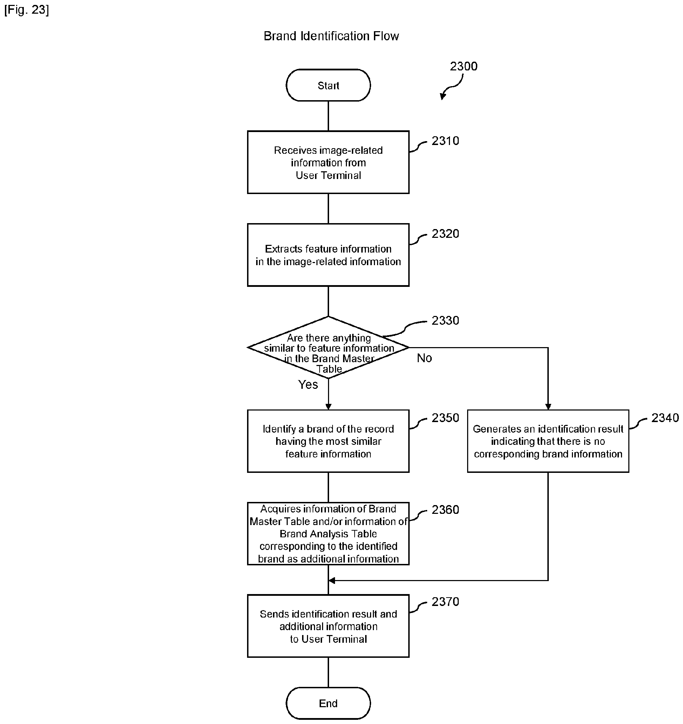

FIG. 23 is an example of Brand Identification Process Flow 2300 executed by Brand Identification Module 214 of Integrated Management Server 101. In step 2310, Brand Identification Module 214 receives image-related information of the portion related to alcoholic beverages from User Terminal 103.
The module extracts feature information in the image-related information (step 2320).

The feature information may be, for example, a shape or a color of the bottle, a shape or color of the label, a content, a shape, a color of the logo, characters written on the label, or coordinate information or positional information obtained by extracting feature points from these pieces of information, or numerical information or data extracted by processing all or part of these pieces of information with a specific algorithm. Other information is applicable if that can be referenced or be compared for identifying brands of alcoholic beverages.

The module compares with Feature Information 812 on Brand Master Table 800 to determine whether there are any brands with similar feature information (step 2330).
If similar feature information is not found, the module generates a determination result indicating that there is no corresponding brand information in step 2340.

If similar feature information is found, identify a brand of the record with the most similar feature information (step 2350).
In step 2360, the module acquires information of Brand Master Table 800 corresponding to the identified brand as additional information. The module may acquire information of Brand Analysis Table 1200 having Universal Brand ID of the identified brand as additional information.

In step 2370, Brand Identification Module 214 sends the determination result and the additional information to User Terminal 103 as information relating to the identified brand. As a result of the determination, information for identifying the brand, such as an identified brand name or Universal Brand ID, or information indicating there is no corresponding brand is sent.

In Management System 1, not only photographs of the bottle of alcoholic beverages but also information on alcoholic beverages, included in articles in magazines, text information distributed via e-mail, the Internet, and the like, can be sent by WISH-to-DRINK Brand Registration Button and registered as a WISH-to-DRINK Brand.

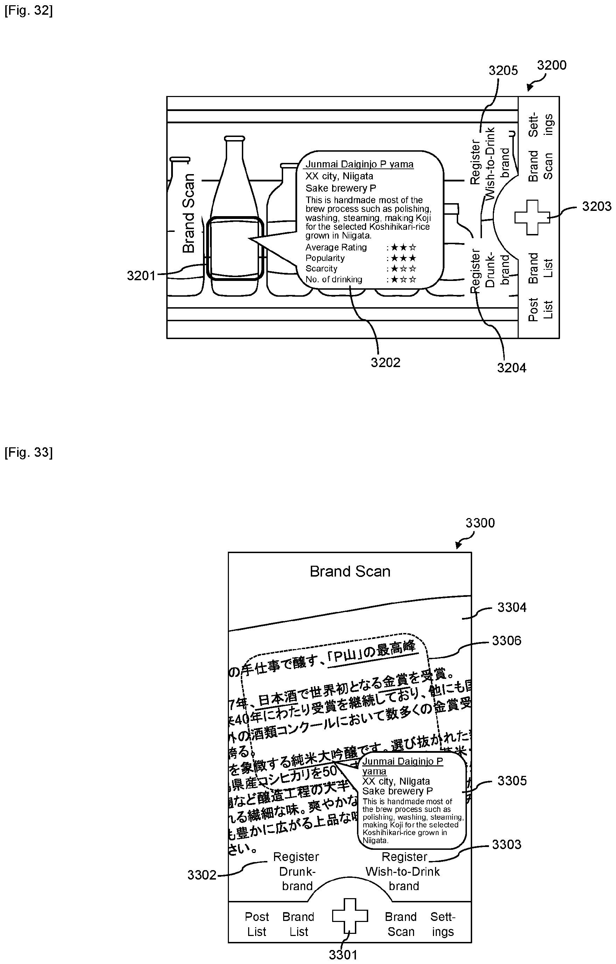

For example, in a case of an article of a magazine as shown in FIG. 33, by photographing a relevant portion of the article of the magazine, image 3304 is subjected to character recognition process such as OCR in Brand Identification Process of Integrated Management Server 101, and information such as a brand name, a brand name, a manufacturer, a brewery, and the like relating to alcoholic beverages in the recognized text is detected. Portions, describing the detected content relating to alcoholic beverages, may be highlighted as with an underscore or dash line border of 3306 and overlay-displayed on Image 3304 of User Terminal.

The detected content relating to alcoholic beverages is collated with Brand Master Table 800 to identify a brand.
Information on the identified brand can be overlay-displayed on image 3304 of User Terminal as shown in 3305.

When a user presses a button such as Brand Register Button 3301, DRUNK-Brand Registration Button 3302, WISH-to-DRINK Brand Registration Button 3303, or the like, identified brand information is registered together with the information of DRANK or WISH-to-DRINK.

The OCR process and the detection of contents relating to alcoholic beverages on photographs may be performed not by Integrated Management Server 101 but by User Terminal 103. In this case, User Terminal may send only images of the detected portions for brand identification to Integrated Management Server 101 or may send only text information after the OCR process instead of images.

In the case of text information delivered via e-mail or the Internet, Brand Registration Module 311 of User Terminal 103 accepts a part of text related to alcoholic beverages or an entire text and sends them to Integrated Management Server 101 instead of images.
Brand Identification Module 214 of Integrated Management Server 101 identifies and registers a WISH-to-DRINK brand by checking the received text information, such as brand names, categories, manufacturers, breweries, and other information, against Brand Master Table 800.
These images and texts can be checked and similarity judged using iterative calculations such as Al, machine learning, and deep learning.

In the present embodiments, User Terminal 103 does cut-out images, and Brand Registration Module 311 does extract feature information from the cut-out images and does compare the feature information with Brand Master Table 800. Another embodiment can be applicable where Brand Registration Module 311 of User Terminal 103 does extract feature information, and Brand Identification Module 214 of Integrated Management Server 101 does compare the received feature information with Brand Master Table 800.

Integrated Management Server 101 receives image-related information and performs the identification process in Brand Identification Module. The image-related information includes entire photographed images, partial images cut-out from the images, feature information extracted by processing all or part of the images, string information obtained by analyzing the images, and the like.

Performing preprocess, such as cutting out images or extracting feature information, as much as possible on User Terminal 103 makes it possible to reduce the amount of data to be sent to Integrated Management Server 101. When User Terminal 103 is a high-spec machine, it can perform the entire Brand Identification Process. In this case, the information to be compared for determination, such as Label Image 811 and Feature Information 812 of Brand Master Table of FIG. 8, may be stored in Auxiliary Storage Device 302 of User Terminal 103.

In another embodiment, User Terminal 103 can complete the identification process on major alcoholic beverage brands. User Terminal stores brand information and comparison information about major brands, identifies a brand, and displays the identified brand by Brand Identification Module. When a brand cannot be identified since the brand has not been determined as a major alcoholic beverage brand, Integrated Management Server 101 can perform the brand identification process by Brand Identification Module.

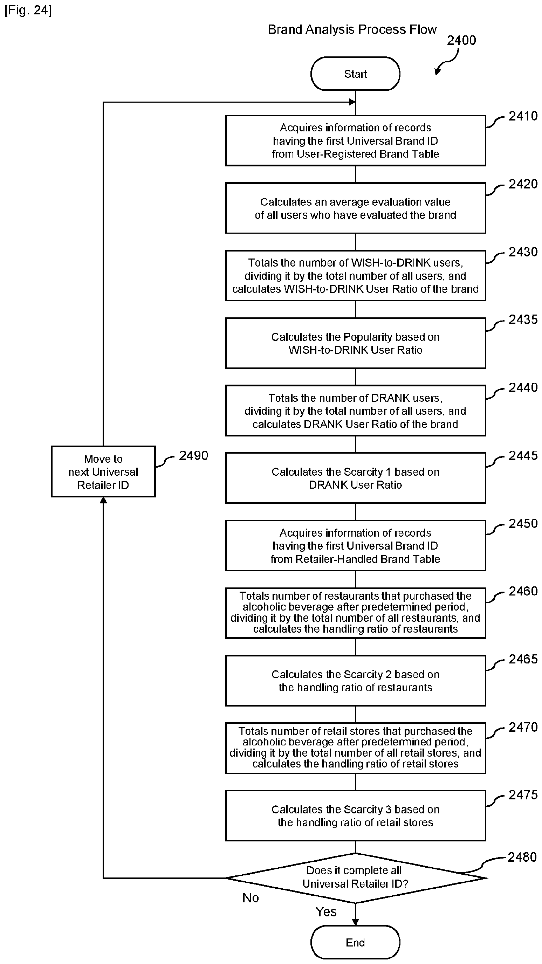

FIG. 24 is an example of Brand Analysis Process Flow 2400 executed by Data Analysis Module 215 of Integrated Management Server 101.
In step 2410, Data Analysis Module 215 acquires all information of records in User-Registered Brand Table 1000, which have Universal Brand ID 1003 of the brand to be analyzed.

In step 2420, the module calculates an average evaluation value of all users who have evaluated the brand and stores the average evaluation value in Brand Analysis Table 1200.

Next, the module verifies information of all users in User-Registered Brand Table 1000 and totals the number of users who have registered the brand as WISH-to-DRINK in Brand Status 1004. Then, dividing the value by the total number of all users calculates a percentage of users who wish to drink the brand. The calculated result is stored in WISH-to-DRINK User Ratio 1203 in Brand Analysis Table 1200 in step 2430.

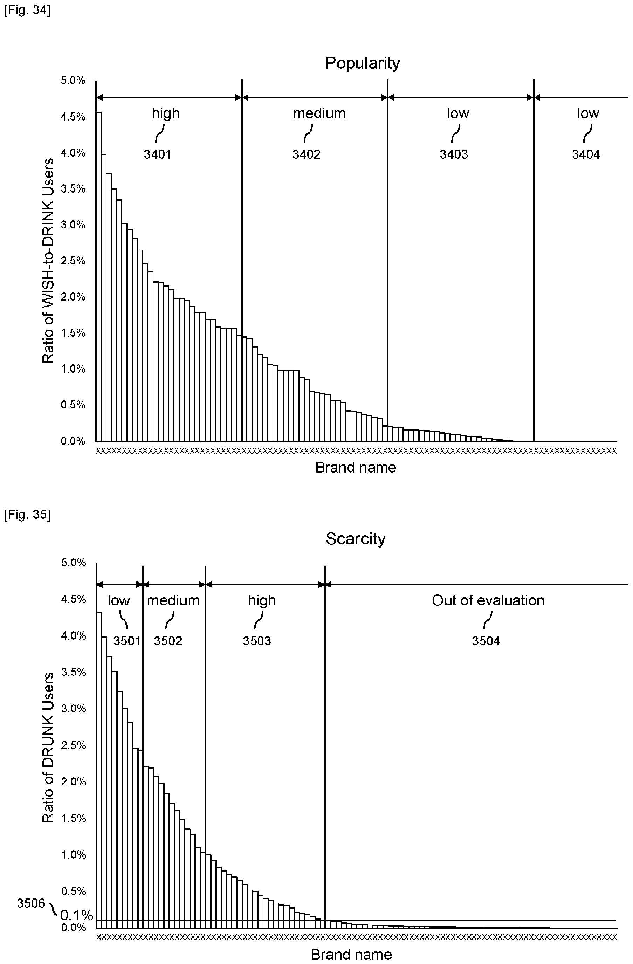

The module then calculates the "popularity" of the brand from WISH-to-DRINK User Ratio (step 2435).
The degree of popularity can be classified, for example, from the distribution of brands based on WISH-to-DRINK User Ratio in descending order. For example, as shown in Fig. 34, the module divides the brands, registered as WISH-to-DRINK brand, into three groups so that each group has the almost same number of users who wish to drink, and register each group as "high," "medium," and "low" group (3401, 3402, and 3003). For Brand 3404 for which WISH-to-DRINK is not registered at all, the popularity level may be set to "low" or "-" as no information.
The vertical axis may indicate not only WISH-to-DRINK User Ratio but also an index obtained by multiplying the number of users who wish to drink the brand by the average evaluation of users who have drunk the brand to calculate the degree of popularity.

The module then verifies the information of all users and totals the number of users who have drunk the brand whose DRANK is stored in Brand Status 1004. Then, dividing the value by the total number of all users calculates a percentage of users who have drunk the brand. The calculated result is stored DRANK User Ratio 1205 of Brand Analysis Table 1200 in step 2440.

The module then calculates "scarcity 1" for the brand from DRANK User Ratio (step 2445).
The degree of scarcity can be classified, for example, from the distribution of brands based on DRANK User Ratio in descending order. For example, as shown in Fig. 35, the module divides the brands, registered as a DRUNK-brand, into three groups so that each group has the almost same number of users who have drunk, and registers the first group as 'scarcity level 1' (3501, 3502, and 3503).
When the number of users who drank is extremely small, it might not mean the degree of scarcity is high, but mean the information is not registered yet. Therefore, when the number of users who drank is equal to or less than a predetermined number or ratio (for example, 100 or 0.1%) (3506), "-" is stored as a non-evaluation target 3504 in Scarcity of Brand Analysis Table 1200 of FIG. 12.

Next, in step 2450, the module acquires all information of records in Retailer-Handled Brand Table 1100, which have Universal Brand ID of the brand to be analyzed.
The module totals the number of restaurants that purchased the alcoholic beverage corresponds to the Universal Brand ID after a predetermined period, e.g., for the last year. Then, dividing that value by the total number of all restaurants calculates a brand-handling restaurant ratio in the last year, and the calculated result is stored in the handling rate of restaurants in Brand Analysis Table 1200 (step 2460).

The module calculates "scarcity 2" for the brand from the brand-handling restaurant ratio (Step 2465).
As shown in Fig. 35, the degree of scarcity is registered, for example, as scarcity level 2' by dividing the distribution of brands based on brand-handling restaurant ratio in descending order into three levels; "low", "medium", and "high".
When the brand-handling restaurant ratio is extremely low, it might not mean the scarcity level is high, but mean the information is not registered yet. Therefore, when the number of retailers handling this alcohol is equal to or less than a predetermined number or ratio (e.g., 10 restaurants or 0.1%), "-" is stored as a non-evaluation target in Brand Analysis Table 1200 of FIG. 12.

In this example, we used the brand-handling restaurant ratio in the last year, the predetermined period may be other periods. The period might be the last month by calculating the handling rate of retailers in the last month. It may also be the entire period up to now.
If these pieces of information can be switched and displayed, it will also be possible to display the handling rate and scarcity in the last year, last six months, or January, respectively, for each period.

The module then totals the number of stores that purchased the alcoholic beverage corresponds to the Universal Brand ID after a predetermined period, e.g., for the last year. Then, dividing that value by the total number of all stores calculates the brand-handling store ratio in the last year, and the calculated result is stored in the handling rate of stores in Brand Analysis Table 1200 (step 2470).

The module calculates "scarcity 3" for the brand from the brand-handling store ratio (Step 2475).
As shown in Fig. 35, the degree of scarcity is registered, for example, as scarcity level 3' by dividing the distribution of brands based on brand-handling store rate in descending order into three levels; "low", "medium", and "high".
When the brand-handling store ratio is extremely low, it might not mean the scarcity is high, but mean the information is not registered yet. Therefore, when the number of stores handling this alcohol is equal to or less than a predetermined number or ratio (e.g., 10 stores or 0.1%), "-" is stored as a non-evaluation target in Brand Analysis Table 1200 of FIG. 12.

In this example, the brand-handling store ratio in the last year was used, but the predetermined period may be other periods. The period might be the last month by calculating the handling rate of stores in the last month. It may also be the entire period up to now.
If these pieces of information can be switched and displayed, it will also be possible to display the handling rate and scarcity in the last year, 6 months, or January respectively for each period.

In Retailer-Handled Brand Table 1100, whether each retailer is a restaurant or a store can be determined by searching Retailer Master Table 900 by using Universal Retailer ID 901 as a key and checking the corresponding Category 902.

The degree of popularity and scarcity may be classified from the distribution or deviation of brands based on the number of users who wish to drink, number of users who drank, number of brand-handling restaurants, number of brand-handling stores, and so on. Simply the top 10 brands can be categorized as popularity and scarcity "high".

Data Analysis Module 215 repeats the brand analysis process until all Universal Brand ID 1003s have been processed. When all the process is completed, Brand Analysis Table 1200 of FIG. 12 is updated.

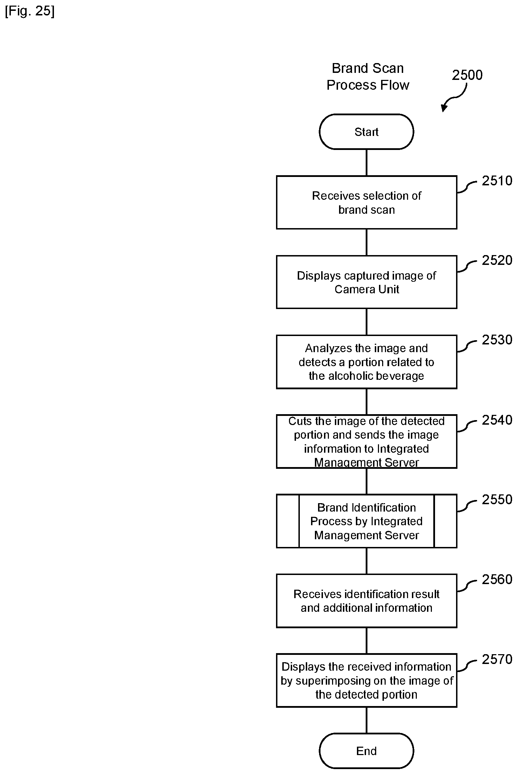

FIG. 25 is an example of Brand Scan Process Flow 2500 executed by Brand Scan Module 312 in User Terminal 103.

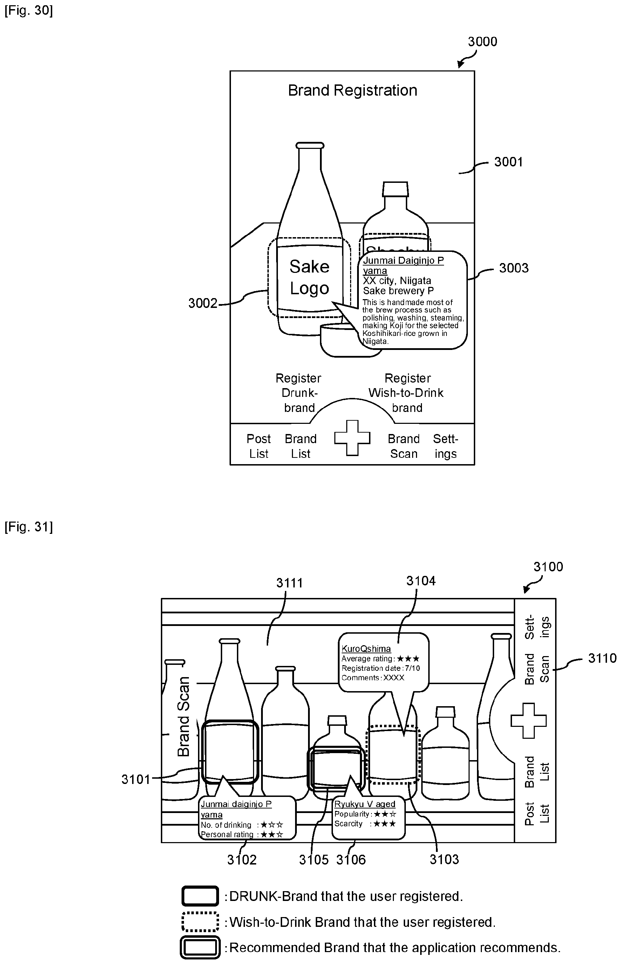

FIGS. 31 to 33 are examples of screens displayed on Display 305 of User Terminal 103 during Brand Scan Process.
When an alcoholic beverage information management application receives a brand scan order from a user, Brand Scan Module 312 starts processing in step 2510. For example, when Brand Scan Button 3110 on the upper right of the screen example of FIG. 31 is tapped, Brand Scan Module 312 is activated to start the process.

Brand Scan Module 312 displays Captured Image 3111 of Camera Unit 307 as in FIG. 31 on Display 305 (step 2520).
The module analyzes an image and detects portions related to alcoholic beverages in step 2530. For example, by detecting a shape or color of a bottle of alcohol, a shape or color of a label on the bottle, or the like, the portion is detected as a candidate for alcohol.
In step 2540, the module sends the image information detected for brand identification to Integrated Management Server 101.

In step 2550, Brand Identification Module 214 of Integrated Management Server 101 analyzes the received image information, identifies the brand of the displayed alcoholic beverage, and returns the determination result and additional information to User Terminal 103.

In step 2560, Brand Scan Module 312 receives the determination result and additional information.
The module overlay-displays the received information on the portion of the image of the display, relating to alcoholic beverages detected in step 2530, step 2570.
At this time, instead of displaying all received information, only information useful to the user is displayed. For example, only information on brands being drunk by the user in the past, information on brands having a high popularity level, information on brands having a high scarcity level, and the like are displayed.

The module may also display a screen for setting what to display. For example, on the settings screen,
Example 1: Displays brands with "medium" or "high" popularity.
Example 2: Displays brands with "high" scarcity.
Example 3: Displays brands with 4.5 or higher average evaluation value. Users can register or change the setting.

When the setting what to display is configured in advance, Brand Identification Module 214 of Integrated Management Server 101 can return only brand information and additional information corresponding to the setting, instead of returning all brand information corresponding to the received image information to User Terminal 103. In the first setting example described above, for example, among brand information specified by the image information displayed on the screen, only brand information of brands with "medium" or "high" popularity is returned to User Terminal 103.

As described above, returning only the information corresponding to the setting of User Terminal 103 can reduce the amount of data received from Integrated Management Server 101, and increase processing speed up to the representation.

FIG. 31 is an example of screen 3100 at the time of Brand Scan Process. It shows a display in a case where the process scans the type of objects arranged on a shelf.
Among displayed bottles of alcoholic beverages, for example, all the label portions are detected as images of portions relating to alcoholic beverages and are sent to Integrated Management Server 101 for brand identification. The final result has useful brand information corresponding to portions 3101, 3103, and 3105. Only this useful information is displayed in this example.

Portion 3101 relates to a brand registered as DRUNK-brand by the user, portion 3103 relates to a brand registered as WISH-to-DRINK brand by the user, and portion 3105 relates to a brand recommended by the app. These portions are highlighted in a distinguishable manner.

The label image of 3101 is analyzed. As a result, the number of times the user has drunk and evaluation information of the user are displayed as additional information corresponding to the identified brand.
The number of times that the user has drunk in the past can be calculated by accumulating the number of DRANK stored in Brand Status 1004 on all records having Universal Brand ID corresponds to the identified brand of User-Registered Brand Table 1000. Dividing the calculated number by the number of DRANK stored in all records for all brands calculates at what rate the user has consumed the identified brand among all the DRUNK-brands.

Similar to FIG. 34, this is compared to the distribution of all DRUNK-brands to calculate and display how many times they drank.
Since the same information as User-Registered Brand Table 1000 of Analysis Data DB 221 is stored also in User Terminal Data 321 of User Terminal 103, the information may be processed and displayed on User Terminal 103.

As an evaluation by the user, Evaluation Value 1006 is acquired and displayed from User-Registered Brand Table 1000 or User Terminal Data 321 of User Terminal 103.
When the user adds an evaluation comment, Evaluation Comment 1005 and its Registered Date 1002 may be acquired from User-Registered Brand Table 1000 or User Terminal Data 321 of User Terminal 103. Then, whole text or omitted partial text may be displayed.

In 3104, information about the brand registered as WISH-to-DRINK brand by the user is displayed.
When the user has registered a brand WISH-to-DRINK, Evaluation Comment 1005 and Registered Date 1002 are acquired from User-Registered Brand Table 1000 or User Terminal Data 321 of User Terminal 103. Then, its whole text or omitted partial text may be displayed.

Average evaluation of all users acquires the corresponding Universal Brand ID 1201 of the identified brands out of Average Evaluation 1202 of Brand Analysis Table 1200 as additional information. As an average evaluation by all users, Average Evaluation 1202 is acquired as additional information from records having Universal Brand ID 1201 of the identified brands in Brand Analysis Table 1200. Brand Scan Module 312 receives the additional information from Integrated Management Server 101 and displays the average evaluation value at 3104.

Information on a recommended brand recommended by Alcoholic Beverage Information Management Application or Integrated Management Server 101 is displayed at 3106.
Popularity and scarcity are obtained as additional information from information such as popularity, scarcity 1, scarcity 2, and scarcity 3 in Brand Analysis Table 1200 (1204, 1206, 1208, 1210) records having Universal Brand ID of the identified brand.

Brand Scan Module 312 receives the additional information from Integrated Management Server 101 and displays popularity and scarcity at 3106.
As the scarcity, among scarcity 1 (fewer users drinking), scarcity 2 (lower handling restaurant ratio), and scarcity 3 (lower handling store ratio), the module may display all of it, part of it, or integrated weighted average of all or a part of it.

In this way, it is possible to keep updating brand information as well as their popularity and scarcity promptly at the timing of updating distribution data, such as product information, retailer information, or sales results, received from multiple distributors.
Besides, using the distribution data received from a plurality of distributors makes it possible to display the brand-handling retailer ratio as scarcity to users.

With highlighting cut-out portions of the identified brands or their vicinity as shown in FIG. 31 (3101, 3103, 3105), the additional information is displayed near the highlighted portions (3102, 3104, 3106).
In a case where the image being photographed moves since brand identification speed is slow, Brand Scan Module 312 may handle the situation by tracking the position of the cut-out portions on the screen. That is, even when the screen is moved, the determination result and the additional information may be displayed at the position of the cut-out portions after the tracked movement.

A smartphone, which is User Terminal 103, usually photographs a bottle from its front on Brand Registration Process, in this case, an upward direction of the bottle (the direction of its mouth) and tan upward direction of the smartphone are both in the same direction in many cases.
However, in Brand Scan Process, the smartphone is held not only vertically but also horizontally as shown in FIG. 31. Whether to shoot with the right side of the smartphone up or with the left side up depends on the preferences of users. In the example of a brand registration in FIG. 29, a plus mark appears at the bottom of the smartphone, and FIG. 31 shows the smartphone is held horizontally.

The accuracy of identification may deteriorate, or the speed of identification may be delayed in a condition where an orientation of the cut-out image, same as an orientation of the smartphone, is different every time since brand identification, performed by Brand Identification Module 214 of Integrated Management Server 101, is based on the cut-out image.

Label Image 811 and Feature Information 812 of the brand master used for brand identification are normally registered in a direction in which characters of the label can be read as they are. That is, the module registers a label image in which the bottle mouth is located upwards and feature information extracted from the label image.
For example, if an image orientation is not known, it is not known which side of the image is up, down, left, and right side of the bottle on the image. In this case, feature information is confirmed while rotating the image by 90 degrees, which may take the time up to four times.

To solve such a problem, in Brand Scan Process, the three-dimensional information acquired from a gyroscope sensor of User Terminal 103 at the time of shooting may be sent to Integrated Management Server 101 together. Normally, bottles are displayed with its mouth up. Therefore, assuming that the opposite direction (upward direction) to the gravity of the gyro at shooting is the upward direction of the image (the direction of the mouth of the bottle), a similarity determination with the feature information is performed.

Alternatively, an image of the entire bottle may be acquired, and the direction of the image may be determined from the shape of the bottle. In this case, it is assumed that the bottle's mouth is in the upward direction in the image, and the similarity determination of the feature information of the image is performed.

In Brand Scan Process, a brand identification might be performed for multiple cut-out images. In this case, an orientation assumed on the first cut-out image can be applied to the remaining cut-out images.
This, processing an image with its orientation information, can increase the accuracy and speed of the image determination process.

FIG. 32 shows an example of screen 3200 in Brand Scan Process, displaying information about a brand when a part of the bottle of the brand in Fig. 31 is tapped.
Since Brand Scan Module 312 can detect all alcoholic beverages on the screen and can display detected alcohol information, it can display additional information about not only brands highlighted in FIG. 31 but also other (not highlighted) brands when a brand selection by tapping by a user is detected.

As the information to be displayed, information stored in User-Registered Brand Table 1000, User Terminal Data 321, Brand Analysis Table 1200, Brand Master Table 800, and the like can be acquired and displayed as additional information (3202).

FIG. 33 shows an example of screen 3300 in a case where Brand Scan Process is executed not only for bottles and labels but also for strings written in magazines.
For instance, a photographed image of an article of a magazine is sent to Integrated Management Server 101, character recognition process such as OCR is performed in Brand Identification Process of Integrated Management Server 101. A brand name, a category, a brand name, a manufacturer, a brewery, and the like in the detected text are checked against Brand Master Table 800 to identify WISH-to-DRINK brand.
By acquiring the identified brand and its additional information, the brand information is displayed on the magazine article image. (3305) A photographed image of a drink menu in a restaurant can also be scanned in the same manner.

Thereafter, pressing plus mark 3301 at the lower center of the screen or tapping a highlighted portion in FIG. 33 activates Brand Registration Module 311. Pressing DRUNK-Brand Registration Button 3302 and WISH-to-DRINK Brand Registration Button 3303 registers the brand as DRUNK-brand and WISH-to-DRINK brand, respectively.
In the examples of FIGS. 31 and 32, it is also possible to register DRUNK-brands and WISH-to-DRINK brands in the same manner.

The present embodiments, by easily scanning alcohol shelves, magazine articles, restaurant menus, or the like, enable to display brand information acquired from distribution data and to register identified brands therefrom as DRUNK-brands or WISH-to-DRINK brands.

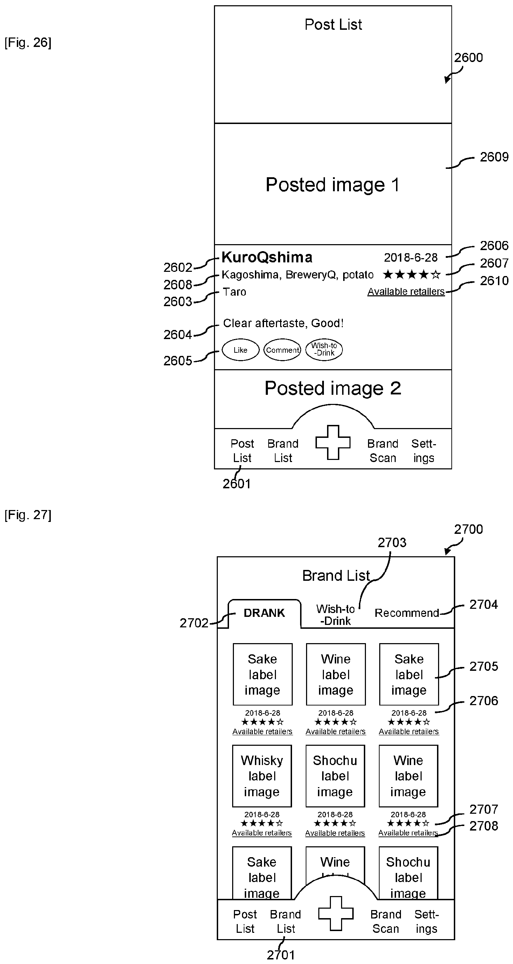

FIG. 26 is an example of Post List Display 2600.
List Display Module 313 of User Terminal 103 is started when Alcoholic Beverage Information Management Application receives an order to display a list of posts from a user, for example, by tapping Post List 2601 at the lower left of the screen in FIG. 26.
List Display Module 313 acquires and displays corresponding information from User Terminal Data 321 stored in Auxiliary Storage Device 302 of User Terminal 103.
User Terminal Data 321 is also stored in User-Registered Brand Table 1000 of Analysis Data DB221 of Integrated Management Server 101. The module may acquire information from the data.

A name of a registered brand is displayed at 2602. The module displays, as a brand name, information stored in User Terminal Data 321 of User Terminal 103 or information of Product Name 802 in Brand Master Table 800 associated with Universal Brand ID 1003 stored in User-Registered Brand Table 1000 of Integrated Management Server 101.
A name of a user is displayed in 2603. The module displays, as a user name, information stored in User Terminal Data 321 of User Terminal 103 or information of User Name 702 stored in User Master Table 700 of Integrated Management Server 101.

A comment posted by a user is displayed at 2604. The module displays information stored in User Terminal Data 321 of User Terminal 103 or Evaluation Comment 1005 stored in User-Registered Brand Table 1000 of Integrated Management Server 101.

An SNS function is displayed at 2605. Alcoholic Beverage Information Management Application has SNS functions so users can tag "Like" or "WISH-to-DRINK" and comment on posts. Post List Display 2600 can display not only posts of the user using the User Terminal 103 but also posts of other users using the application.

A posted date is displayed at 2606. List Display Module 313 displays information stored in User Terminal Data 321 of User Terminal 103 or Registered Date 1002 stored in User-Registered Brand Table 1000 of Integrated Management Server 101.

A user-evaluated rate is displayed in 2607. The module displays information stored in User Terminal Data 321 of User Terminal 103 or Evaluation Comment 1005 stored in User-Registered Brand Table 1000 of Integrated Management Server 101.

Detailed information regarding a registered brand is displayed at 2608. The module displays, as detailed information, information stored in User Terminal Data 321 of User Terminal 103 or information of Brand Master Table 800 associated with Universal Brand ID stored in User-Registered Brand Table 1000 of Integrated Management Server 101.

A posted image relating to a registered brand is displayed at 2609. The module displays information stored in User Terminal Data 321 of User Terminal 103 or Posted Image 1008 stored in User-Registered Brand Table 1000 of Integrated Management Server 101.

Information of various tables such as User-Registered Brand Table 1000, User Master Table 700, Brand Master Table 800, and Brand Analysis Table 1200 may also be displayed.

In FIG. 27, display 2700 is an example of another registration list screen. When Alcoholic Beverage Information Management Application receives an order to display a brand list from a user by tapping Brand List 2701 at the lower left of the screen, List Display Module 313 of User Terminal 103 is activated.
List Display Module 313 acquires and displays corresponding information from User Terminal Data 321 stored in Auxiliary Storage Device 302 of User Terminal 103.
User Terminal Data 321 is also stored in User-Registered Brand Table 1000 of Analysis Data DB221 of Integrated Management Server 101. The module may acquire information from the data.

Upon receiving the selection of DRANK Button 2702, the module acquires information about brands being registered as DRANK in Brand Status 1004 of User-Registered Brand Table 1000 and displays a list of the brands.

Detailed information about registered brands in the same manner, as in FIG. 26, is displayed in 2705 to 2707. The module displays, as detailed information, information stored in User Terminal Data 321 of User Terminal 103 or information stored in User-Registered Brand Table 1000 of Integrated Management Server 101.
Information of various tables such as User-Registered Brand Table 1000, User Master Table 700, Brand Master Table 800, and Brand Analysis Table 1200 may also be displayed.

Upon receiving the selection of WISH-to-DRINK Button 2703, the module acquires information about brands being registered as WISH-to-DRINK in Brand Status 1004 in User-Registered Brand Table 1000 and displays a list of the brand.

Upon receiving the selection of RECOMMENDED Button of 2703, the module acquires information about brands being registered as RECOMMENDED in Brand Status 1004 in User-Registered Brand Table 1000 and displays a list of the brand.
As the recommendation, brands according to users' preference, such as brands that a user has drunk in the past, are registered. Also, information about brands having high popularity or scarcity among brands according to user-preferences may be registered and displayed.

FIG. 28 is an example of screen 2800 displaying retailers where users can drink selected brands on a map.
List Display Module 313 displays a list of stores on a map, such as shown in FIG. 28, upon receipt of an order to display brand-available retailers, such as 2610 in FIG. 26 or 2708 in FIG. 27.
List Display Module 313 inquires at Integrated Management Server 101 about the information of brand-available retailers. Data Analysis Module 215 of Integrated Management Server 101 extracts information of the brand-available retailers from Retailer-Handled Brand Table 1100 of Analysis Data DB221, thereby generating the information of the brand-available retailers.

Displayed retailer name, address, location information on a map, telephone number, etc. are acquired from Retailer Name 903, Address 905, Location 906, Telephone Number 907, etc. of Retailer Master Table 900 associated with corresponding Universal Retailer ID.
List Display Module 313 displays the acquired information at the position of the coordinates described in Location 906. (2804)

As shown at 2801 and 2802, stockout risk may be displayed. Stockout risk can be displayed by acquiring information of Stockout Risk 1108 in Retailer-Handled Brand Table 1100.
In Stockout Risk 1108, there are "high", "medium", "low" and "stockout presumed", and all this information may be displayed on the map, but as in the example of FIG. 28, "stockout presumed" may not be displayed.

In the example of FIG. 28, brand-available retailers are arranged on the map, but they may be displayed as a list instead of the map. In this case, comparing the current location acquired from the GPS of User Terminal 103 with Address 905 or Location 906 makes it possible to display the retailer list in the order of closeness to the current location.

FIG. 29 shows an example of Brand Registration Screen. Its explanation was given in the explanation of Brand Registration Process Flow in Fig. 22.

FIG. 30 shows an example of a screen for displaying additional information of a brand in Brand Registration Process.
Receiving a tap or the like of highlighted image portions, Brand Registration Module 311 displays additional information of the identified brand (3003). Information stored in User-Registered Brand Table 1000, User Terminal Data 321, Brand Analysis Table 1200, Brand Master Table 800, and the like can be acquired and displayed as additional information.

FIG. 31 shows an example of a brand scanning screen.
FIG. 32 shows another display example of the brand scanning screen.
FIG. 33 shows another display example of the brand scanning screen.
The explanation of FIGS. 31 to 35 was given in the explanation of Brand Scan Process Flow on FIG. 25.

FIG. 34 is a diagram for explaining the determination of popularity level of Brand Analysis Table 1200.
Data Analysis Module 215 calculates the "percentage of users who wish to drink" for all brands and stores the calculated percentage as WISH-to-DRINK User Ratio 1203 in Brand Analysis Table 1200. The vertical axis represents WISH-to-DRINK User Ratio, and brands are arranged in descending order of the ratio. Names of the respective brands are arranged in the horizontal axis. The vertical axis may apply not only WISH-to-DRINK User Ratio but also calculated index, as the degree of popularity, obtained by multiplying the number of users who WISH-to-DRINK and average evaluation value by users who DRANK.
Based on the distribution of the graph, brands can be classified as high, medium, or low in popularity within a predetermined range.

For example, the module may arrange brands, registered as WISH-to-DRINK brand in Brand Status of User-Registered Brand Table 1000 (i.e., brands having WISH-to-DRINK User Ratio larger than "0"), in descending order of WISH-to-DRINK User Ratio, may divide the brands into three groups so that each group has the almost same number of brands, and may classify each group as "high", "medium", and "low" in descending order.
Assuming, for example, that there are 300 brands registered as WISH-to-DRINK, 100 brands are allocated to each group; "high", "medium", and "low". Brands being not registered as WISH-to-DRINK are classified as "low".

In another example, the module may divide the brands into three groups so that each group has the almost same number of users who WISH-to-DRINK, and may classify each group as "high", "medium", and "low" in descending order.

For example, in the example of FIG. 34, among the brands having WISH-to-DRINK User Ratio larger than 0, the brands may be classified so that total dimensions of graph bars of "high", "medium", and "low" become equal. The classification may be performed based on other predetermined ratios or methods.

FIG. 35 is a diagram for explaining the determination of scarcity degree in Brand Analysis Table 1200.
Data Analysis Module 215 calculates DRANK User Ratio for all brands and stores the calculated ratio in Brand Analysis Table 1200. The vertical axis represents DRANK User Ratio and brands are arranged in descending order of the ratio. Names of the respective brands are arranged in the horizontal axis.
Based on the distribution of the graph, brands can be classified as low, medium, or high in scarcity within a predetermined range.

When DRANK User Ratio is extremely small, it might not mean the degree of scarcity is high but mean the information is not registered yet. Therefore, when the number of drinkers is equal to or less than a predetermined number or ratio (for example, 100 or 0.1%), consideration is not given.
For example, the module may arrange brands, registered as DRUNK-brand in Brand Status of User-Registered Brand Table 1000, in descending order of DRANK User Ratio, may divide the brands into three groups so that each group has the almost same number of brands, and may classify each group as "low", "medium", and "high" in descending order.
Assuming, for example, that there are 300 brands to which more than 100 users registered as DRANK, 100 brands are allocated to each, scarcity "low", "medium", and "high", group. Brands to which less than 100 users registered as DRANK are set to "-" as a non-evaluation target.

In another example, the module may divide the brands into three groups so that each group has the almost same number of users who DRANK and may classify each group as scarcity "low", "medium", and "high" in descending order of DRANK User Ratio.
For example, in the example of FIG. 35, among the brands having DRANK User Ratio larger than 0.1%, the brands may be classified so that total dimensions of graph bars of "high", "medium", and "low" become equal.

The classification may be performed based on other predetermined ratios or methods.
The degree of popularity and scarcity may be classified from the distribution or deviation of brands based on the number of users who wish to drink, number of users who drank, number of brand-handling restaurants, number of brand-handling stores, and so on. Simply the top 10 brands can be categorized as popularity and scarcity "high."

The present invention is not limited to the above-described embodiments, it includes various modifications. Since the above-described examples have been described in detail to illustrate the present invention easily, the present invention is not necessarily limited to comprising all the described configurations. It is also possible to replace a part of the configuration of one embodiment with the configuration of another embodiment, and it is also possible to add the configuration of another embodiment to the configuration of one embodiment. Further, it is possible to add, delete, or replace a part of the configuration of each embodiment.

Besides, some or all of the above-described configurations, functions, process units, process means, and the like may be realized by hardware, for example, by designing them by an integrated circuit. Each of the above-described configurations, functions, and the like may also be implemented by a program, and the processor may be implemented by software by interpreting and executing a program that implements the respective functions. Information such as programs, tables, and files that realize various functions can be stored in a memory, a recording device such as a hard disk or an SSD (Solid State Drive), or a recording medium such as an IC card, an SD card, or a DVD.

Besides, the control lines or the information lines, shown in figures, are considered to be necessary for explanation and are not necessarily shown in products. Practically, it may be considered that almost all the configurations are connected to each other.

### [Reference Signs List]

1. Management System, 101. Integrated Management Server, 102. Distributor Terminal, 103. User Terminal, 104. Retailer Terminal, 105. Manufacturer Terminal, 211. Data Formatting Module, 212. Data Matching Module, 213. User Data Management Module, 214. Brand Identification Module, 215. Data Analysis Module, 221. Analysis Data DB, 222. Cross-Company Master DB, 223. Formatted Distributor Data DB, 224. Received Distributor Data DB, 311. Brand Registration Module, 312. Brand Scan Module, 313. List Display Module, 321. User Terminal Data

## Claims

1. An information management system comprising,
an integrated management server comprising:
a data formatting means for receiving sales record information from a plurality of distributor terminals of a plurality of distributors which are selling products to retailers;
a data matching means for updating brand master information for universally managing alcoholic beverage brands sold to the retailers across the plurality of distributors based on each of the received sales record information; and
a brand Identification means for analyzing image related information received from a user terminal, identifying an alcoholic beverage brand by comparing a feature information corresponding to an alcoholic beverage brand registered in the brand master information, and sending information related to identified alcoholic beverage brand to the user terminal; and the user terminal comprising:
a display means for displaying information on the sent alcoholic beverage brand.

2. The information management system according to claim 1, wherein the data formatting means stores an information acquired from the respective sales record information into a universal sales record information for managing universally in the plurality of distributors, and stores into the universal sales record information; and
the data matching means update the brand master information by:
storing, if an alcoholic beverage brand registered in the brand master information exists in the universal sales record information, a brand identifying information identifying corresponding alcoholic beverage brand into the universal sales record information, and
adding, if an alcoholic beverage brand registered in the brand master information does not exist in the universal sales record information, the information of the alcoholic beverage brand in which did not exist into the brand master information.

3. The information management system of claim 1 or 2, wherein
the user terminal comprising:
a brand registration means for receiving a selection of a drunk-brand or a wish-to-drink brand from the user,
wherein
the brand registration means transmits a part or all of an image acquired by a camera unit as the image related information into the integrated management server together with information indicating whether the drunk-brand or the wish-to-drink brand, and
the integrated management server stores information indicating whether the drunk-brand or the wish-to-drink brand in association with information of an alcoholic beverage brand identified by analyzing the image related information by the brand Identification means.

4. The information management system according to claim 3, wherein the integrated management server comprising:
a data analysis means for analyzing data,
wherein
the data analysis means calculates the popularity based on an amount of the users in whom the information indicating the wish-to-drink brand is stored, and
the brand Identification means transmits the popularity to the user terminal as information related to the identified alcoholic beverage brand, and
the user terminal displays the popularity with a name of the alcoholic beverage brand based on the transmitted information of the alcoholic beverage brand.

5. The information management system according to any one of claims 1 to 4, wherein the integrated management server comprising:
a data analysis means for analyzing data,
wherein
the data analysis means calculates an amount of retailers trading predetermined alcoholic beverage brands as scarcity based on the brand information, retailer information, and sales volume stored in the respective sales record information,
the brand Identification means transmits the scarcity to the user terminal as information related to the identified alcoholic beverage brand, and
the user terminal displays the scarcity with a name of the alcoholic beverage brand based on the transmitted information related to the alcoholic beverage brand.

6. The information management system according to any one of claims 1 to 5, wherein
the integrated management server comprising:
a data analysis means for analyzing data,
wherein
the data analysis means obtains an out-of-stock risk of a predetermined brand in a predetermined retailer based on the respective sales record information received from the plurality of distributor terminals, and transmits information indicating the out-of-stock risk to the user terminal as information related to the identified alcoholic beverage brand, and
the user terminal displays, based on the transmitted information of the alcoholic beverage brand, information indicating the out-of-stock risk of the predetermined brand in the predetermined retailer.

7. The information management system according to claim 6, wherein the out-of-stock risk is displayed in association with information indicating the predetermined retailer on the map.

8. The information management system according to claims 6 or 7, wherein the out-of-stock risk is determined based on the purchase frequency based on the respective sales record information received from the plurality of distributor terminals and information on the time of sale to the predetermined retailer.

9. The information management system according to any one of claims 1 to 8, wherein
the user terminal comprising:
a brand scan means for detecting a plurality of partial images related to alcoholic beverages from a scanning target image acquired from the camera unit and transmitting the detected plurality of partial images to the integrated management server;
the brand Identification means analyzes the plurality of partial images as the image related information, identifies corresponding plurality of alcoholic beverage brands, and transmits information of the identified plurality of alcoholic beverage brands to the user terminal; and
the display means of the user terminal displays received information of the plurality of alcoholic beverage brands in association with the positions of the plurality of partial images of the scanning target image.

10. The information management system according to claim 9, wherein information related to the plurality of alcoholic beverage brands is at least 1 of the popularity, scarcity, and average evaluation of each brands.

11. The information management system according to claim 9 or 10,
wherein
the scanning target image is an image in which a plurality of bottles of alcoholic beverages are displayed,
the brand scan means detects label portions of the plurality of bottles of the scanning target image as the plurality of partial images.

12. The information management system according to claim 9 or 10, wherein the scanning target image is an article or menu related to alcoholic beverages, and
the brand scan means detects, as the plurality of partial images, a portion of a description related to alcoholic beverages from a character strings described in an article or a menu of the scanning target image.

13. A user terminal for displaying information of alcoholic beverages, comprising:
an image acquiring means for acquiring an image from a camera unit;
a brand registration means for sending image related information,
receiving means for receiving, from an integrated management server, information related to an alcoholic beverage brand identified by comparing a feature information corresponding to an alcoholic beverage brand registered in a brand master information based on transmitted image related information,
a display means for displaying received information related to alcoholic beverage brand,
wherein
the brand master information is universally managed, in plurality of distributor terminals, alcoholic beverage brands sold to retailers, and is updated based on the respective sales record information received from the plurality of distributor terminals.

14. The user terminal according to claim 13,
wherein
the information acquired from the respective sales record information is stored in the integrated management server as universal sales record information for universally managing to the plurality of distributors,
the brand master information is updated by:
storing, if an alcoholic beverage brand registered in the brand master information exists in the universal sales record information, a brand identifying information identifying corresponding alcoholic beverage brand into the universal sales record information, and
adding, if an alcoholic beverage brand registered in the brand master information does not exist in the universal sales record information, the information of the alcoholic beverage brand in which did not exist into the brand master information.

15. The user terminal according to claim 13 or 14,
wherein the user terminal comprising,
a brand registration means for receiving a selection of a drunk-brand or a wish-to-drink brand from the user,
wherein
the brand registration means transmits a part or all of the image acquired by a camera unit as the image related information into the integrated management server together with information indicating whether the drunk-brand or the wish-to-drink brand.

16. The user terminal according to claim 15,
wherein
the receiving means receives the popularity calculated based on an amount of the user in whom the information indicating the wish-to-drink brand is stored as information related to the alcoholic beverage brand,
the display means displays the popularity with a name of the alcoholic beverage brand based on the received information of the alcoholic beverage brand.

17. The user terminal according to any one of claims 13 to 16,
whirein
the receiving means receives the scarcity indicating an amount of retailers trading predetermined alcoholic beverage brands calculated based on the brand information, retailer information, and sales volume stored in the respective sales record information, as information related to the alcoholic beverage brands,
the display means displays the scarcity with a name of the alcoholic beverage brand based on the received information related to the alcoholic beverage brand.

18. The user terminal according to any one of claims 13 to 17,
wherein
the receiving means receives, as information related to the alcoholic beverage brand, an out-of-stock risk of a predetermined brand in a predetermined retailer calculated based on the respective sales record information received from the plurality of distributor terminals,
the display means displays information indicating the out-of-stock risk of the predetermined brand in the predetermined retailer based on the received information related to the alcoholic beverage brand.

19. The user terminal according to claim 18,
wherein the out-of-stock risk is displayed in association with information indicating the predetermined retailer on the map.

20. The user terminal according to claim 18 or 19,
wherein the out-of-service risk is determined based on the purchase frequency based on the sales record information received from the plurality of distributor terminals and the information on the time of sale to the retailer.

21. The user terminal according to any one of claims 13 to 20,
wherein the user terminal comprising:
a brand scan means for detecting a plurality of partial images related to alcoholic beverages from a scanning target image acquired from a camera unit and transmitting the detected plurality of partial images as the image related information to the integrated management server;
wherein
the receiving unit receives information related to a plurality of alcoholic beverage brands identified corresponding to the plurality of partial images, the display means displays received information related to the plurality of alcoholic beverage brands in association with the positions of the plurality of partial images on the scanning target image.

22. The user terminal according to claim 21, wherein the information related to the plurality of alcoholic beverage brands is at least 1 of the popularity, scarcity, and average evaluation of each brands.

23. The user terminal according to claim 21 or 22,
wherein
the scanning target image is an image in which a plurality of bottles of alcoholic beverages are displayed,
the brand scan means detects label portions of the plurality of bottles of the scanning target image as the plurality of partial images.

24. The user terminal according to claim 21 or 22, wherein
the scanning target image is an article or menu related to alcoholic beverages, and
the brand scan means detects, as the plurality of partial images, a portion of a description relating to alcoholic beverages from character strings described in an article or a menu of the scanning target image.

25. A program for realizing a user terminal for displaying information of alcoholic beverages, wherein the program makes the user terminal function as each means described in any one of claims 13 to 24.

26. An integrated management server, comprising:
a data formatting means for receiving sales record information from a plurality of distributor terminals of a plurality of distributors which are selling products to retailers;
a data matching means for updating brand master information for universally managing alcoholic beverage brands sold to the retailer to the plurality of distributors based on each of the received sales record information; and
a brand Identification means for analyzing image related information received from a user terminal, identifying an alcoholic beverage brand by comparing a feature information corresponding to an alcoholic beverage brand registered in the brand master information, and sending information related to identified alcoholic beverage brand to the user terminal.

27. The integrated management server according to claim 26, wherein the data formatting means stores an information acquired from the respective sales record information into a universal sales record information for managing universally in the plurality of distributors, and stores into the universal sales record information; and
the data matching means update the brand master information by:
storing, if an alcoholic beverage brand registered in the brand master information exists in the universal sales record information, a brand identifying information identifying corresponding alcoholic beverage brand into the universal sales record information, and
adding, if an alcoholic beverage brand registered in the brand master information does not exist in the universal sales record information, the information of the alcoholic beverage brand in which did not exist into the brand master information.

28. The information management system according to claim 26 or 27:
receives a part or all of an image acquired by a camera unit as the image related information together with information indicating whether the drunk-brand or the wish-to-drink brand, and
stores information indicating whether the drunk-brand or the wish-to-drink brand in association with information of an alcoholic beverage brand identified by analyzing the image related information by the brand Identification means.

29. The integrated management server according to claim 28 comprising:
a data analysis means for analyzing data,
wherein
the data analysis means calculates the popularity based on an amount of the users in whom the information indicating the wish-to-drink brand is stored, and
the brand Identification means transmits the popularity to the user terminal as information related to the identified alcoholic beverage brand.

30. The integrated management server according to any one of claims 26 to 29, comprising:
a data analysis means for analyzing data,
wherein
the data analysis means calculates an amount of retailers trading predetermined alcoholic beverage brands as scarcity based on the brand information, retailer information, and sales volume stored in the respective sales record information, and
the brand Identification means transmits the scarcity to the user terminal as information related to the identified alcoholic beverage brand.

31. The integrated management server according to any one of claims 26 to 30, comprising:
a data analysis means for analyzing data,
wherein
the data analysis means obtains an out-of-stock risk of a predetermined brand in a predetermined retailer based on the respective sales record information received from the plurality of distributor terminals, and transmits information indicating the out-of-stock risk to the user terminal as information related to the identified alcoholic beverage brand.

32. The integrated management server according to claim 31, wherein the out-of-stock risk is displayed in association with information indicating the predetermined retailer on the map.

33. The integrated management server according to claim 31 or 32, wherein wherein the out-of-service risk is determined based on the purchase frequency based on the sales record information received from the plurality of distributor terminals and the information on the time of sale to the retailer.

34. An integrated management server according to any one of claims 26 to 33, receives, from the user terminal, a plurality of partial images related to alcoholic beverages detected from a scanning target image acquired from a camera unit of the user terminal;
wherein
the brand Identification means analyzes the plurality of partial images as the image related information, identifies corresponding a plurality of alcoholic beverage brands, and sends information related to identified plurality of alcoholic beverage brands to the user terminal; and
the sent information related to the plurality of alcoholic beverage brands in association with the positions of the plurality of partial images on the scanning target image.

35. The integrated management server according to claim 34, wherein the information related to the plurality of alcoholic beverage brands is at least 1 of the popularity, scarcity, and average evaluation of each brands.

36. The management server according to claim 34 or 35,
wherein
the scanning target image is an image in which a plurality of bottles of alcoholic beverages are displayed,
label portions of the plurality of bottles of the scanning target image are detected as the plurality of partial images.

37. The management server according to claim 35 or 36, wherein
the scanning target image is an article or menu related to alcoholic beverages, and
a portion of a description relating to alcoholic beverages from character strings described in an article or a menu of the scanning target image.
